# EUROPEAN PATENT APPLICATION

(11) **EP 4 475 022 A1**
(43) Date of publication of application: **11.12.2024**
(21) Application number: 22928419.5
(22) Date of filing: 19.12.2022
(51) Int. Cl.: G06F 21/57

(54) **TRUSTED COMPUTING METHOD, CHIP, AND SERVER**

(30) Priority: 28.02.2022 CN 202210191235
(71) Applicant: Huawei Technologies Co., Ltd., Shenzhen, Guangdong 518129 (CN)
(72) Inventor: LI, Xiaochuan, Shenzhen, Guangdong 518129 (CN); ZHANG, Chao, Shenzhen, Guangdong 518129 (CN); WU, Lingling, Shenzhen, Guangdong 518129 (CN); LI, Hong, Shenzhen, Guangdong 518129 (CN)
(74) Representative: Huawei European IPR
(86) International application number: PCT/CN2022/140108
(87) International publication number: WO 2023/160166

(57) **Abstract**

This application provides a trust computing method, a chip, and a server. The method includes the following steps: A trusted chip sends an authentication request to an authentication node, where the authentication request is used by the authentication node to perform trust authentication on the trusted chip. The trusted chip performs trust authentication on a component, where the component includes an input/output I/O unit and a storage unit, so that trust authentication may also be performed by the trusted chip on a component other than a service processor in the server. This improves security of the server.

## Description

This application claims priority to Chinese Patent Application No. 202210191235.8, filed on February 28, 2022 and entitled "TRUST COMPUTING METHOD, CHIP, AND SERVER", which is incorporated herein by reference in its entirety.

### TECHNICAL FIELD

This application relates to the computer field, and in particular, to a trust computing method, a chip, and a server.

### BACKGROUND

Since the 1980s, Microsoft and Intel have formed the Wintel alliance to promote development of the personal computer (personal computer, PC) industry. The two companies work closely in the PC industry to drive the computing industry to grow faster, which gradually influences other computing devices such as servers. The computing devices such as the servers have various application scenarios and configuration types, and have high reliability requirements. In addition, the servers have a huge business volume and are the focus of open industry ecosystem construction.

Conventional servers are used as an example. Currently, an industry ecosystem of the conventional servers has the following characteristics:

Low standardization: The conventional servers already have some component standardization foundations. For example, components such as memory modules, solid-state drives (solid-state drives, SSDs), and peripheral component interconnect express (peripheral component interconnect express, PCIE) cards have respective standards. Component standardization greatly contributes to the industry ecosystem and resource sharing, reducing development workloads of some server vendors. However, standard components account for a small proportion in an entire server, and therefore a large amount of manpower needs to be devoted to server mainboard development for adaptation between the standard components and non-standard components.

Insufficient diversity of computing power: In the background of great development of massive data, big data analysis, machine learning, and artificial intelligence, dedicated processors such as graphics processing units (graphics processing units, GPUs), data processing units (data processing units, DPUs), and neural-network processing units (neural-network processing units, NPUs) are widely used. A single system of a device in the conventional servers cannot meet a current requirement. Complexity of hardware devices of a server increases significantly. The server includes both a service processing system and a management system of a chip such as a GPU. In addition, a plurality of systems may have a plurality of combinations of architectures, for example, a combination of an X86 architecture and an ARM architecture.

Further, trust computing is a technical means used to ensure integrity of server systems and applications and ensure that the server systems and the applications are run in an expected trust status of a design objective. The server is threatened by a near-end attack such as disassembling on hardware. For example, during transportation, warehousing, and installation, a third party replaces hardware or tampered firmware to obtain the highest permission of a computing system. In addition, the server is also threatened by a remote attack on data, service systems, and firmware. For example, when replacing a component or upgrading software and hardware during maintenance, the third party replaces the component with an unknown component or upgrades the software and hardware to risky software and hardware. As a result, the third party also has a capability to control the computing system. The trust computing can ensure that the server has a trust protection capability throughout a full lifecycle and prevent the third party from obtaining the capability to control the computing system.

However, the conventional server can perform trust authentication only on the service processing system. In a scenario of diversified computing power, trust authentication cannot be performed on other diversified computing power of the server, for example, the management system of the chip such as the GPU. As a result, a vulnerability exists in the trust computing of the current conventional server, and security of the server is low.

### SUMMARY

This application provides a trust computing method, a chip, and a server, to resolve a problem that a vulnerability exists in trust computing and security of the server is low because a conventional server can perform trust authentication only on a service processing system.

According to a first aspect, a trust computing method is provided, where the method is applied to a server. The server includes a trusted chip and a component, where the trusted chip and the component establish a communication connection through a bus. The method includes the following steps: The trusted chip sends an authentication request to an authentication node, where the authentication request is used by the authentication node to perform trust authentication on the trusted chip. The trusted chip performs trust authentication on the component. The component includes an input/output I/O unit and a storage unit.

During specific implementation, the I/O unit includes a network adapter or a high-speed serial computer expansion bus standard PCIE riser riser, and the storage unit includes one or more of a hard disk backplane, an extension unit (expander), and a PCIE switch (switch).

Optionally, the component includes a computing unit, an acceleration unit, a memory expansion unit, and a cooling unit. The computing unit includes a central processing unit CPU, a double data rate (double data rate, DDR) synchronous dynamic random access memory, and a power supply. The acceleration unit includes a carrier board and an acceleration card interconnection switch (switch). The acceleration card includes one or more of a graphics processing unit (graphics processing unit, GPU), a data processing unit (data processing unit, DPU), and a neural-network processing unit (neural-network processing unit, NPU). The memory expansion unit includes a carrier board, and further includes one or more of a memory expansion chip, a dual in-line memory module (dual in-line memory module, DIMM), and a storage class memory (storage class memory, SCM) medium. The cooling unit includes one or two of air cooling and liquid cooling.

According to the method described in the first aspect, after the trust authentication is performed by the authentication node on the trusted chip, the trusted chip performs trust authentication on the component, to implement integrity check on the entire server to resolve a problem that security of the server is low because a current server has a vulnerability in trust computing.

In a possible implementation, the trusted chip is integrated into a baseboard management controller BMC chip of the server, or the trusted chip is externally connected to the BMC chip.

In the foregoing implementation, the trusted chip is integrated into or externally connected to the BMC chip, where the BMC chip is an embedded management system oriented to a full lifecycle of the server. In this way, the trust computing no longer depends on a service server (a CPU), and even if the CPU is not powered on, trust protection on the server can be performed by using the BMC chip. In this way, trust protection can be performed on the server when the CPU is not powered on (for example, in an installation, transportation, or scrapping phase in the full lifecycle). In addition, because the BMC chip and the CPU have an advantage of isolating a computing resource and a network resource, the trust computing does not need to consider how to isolate the computing resource, so that a design threshold is lowered and a dual-system security architecture with independent hardware protection is implemented. In addition, a network managed by the BMC chip is less exposed than a network managed by the CPU, and a third party has a lower possibility of connecting to the BMC chip than the CPU, so that an attack risk is reduced.

In a possible implementation, before the trusted chip sends the authentication request to a trust authentication node, the method further includes: The trusted chip performs integrity check on firmware of the trusted chip. Specifically, the firmware may be verified in a secure and trust boot manner, to ensure integrity of the firmware of the trusted chip. During specific implementation, the trusted chip may be set to be unchangeable after delivery, and may support a user-defined secure boot policy. Code security protection is set based on a service requirement. A specific implementation of firmware check is not limited in this application. After the firmware integrity check succeeds, the BMC chip may be started. Otherwise, processing such as warning to notify that the firmware is incomplete or powering off the server is performed.

In the foregoing implementation, by performing integrity check on the firmware of the trusted chip, the trusted chip can prevent the third party from obtaining control permission of the server by replacing the firmware in the first phase (for example, warehousing or transportation) in the lifecycle of the server, to further improve the security of the server.

In a possible implementation, the authentication request includes a first certificate, the first certificate is generated by the trusted chip based on a preset first key, and the first certificate is used by the authentication node to perform trust authentication on the first certificate based on a first preset certificate. If the authentication succeeds, it indicates that a trusted chip 110 is not tampered with and is an integrity chip. If the authentication fails, it indicates that the trusted chip is tampered with.

Similarly, when performing trust authentication on the component, the trusted chip may first receive a second certificate sent by the component, where the second certificate is generated by the component based on a preset second key. The trusted chip performs trust authentication on the second certificate based on a second preset certificate. If the authentication succeeds, it indicates that a component 120 is not tampered with, and is a component having integrity and security. If the authentication fails, it indicates that the component is tampered with. The second preset certificate may be burnt into the trusted chip at delivery of the trusted chip 110.

It should be noted that the first key and the second key may be private keys in an encryption algorithm, and the first preset certificate and the second preset certificate may be public key certificates in the encryption algorithm. The trusted chip generates a signature and the first certificate based on the first key (private key), and sends, to the authentication node, the first certificate carrying the signature. The authentication node may perform a signature verification operation on the received first certificate by using the first preset certificate (public key certificate), to implement trust authentication on the trusted chip. Similarly, the component may also generate a signature and the second certificate based on the second key (private key), and sends, to the trusted chip for trust authentication, the second certificate carrying the signature. Details are not described herein again. The encryption algorithm may be an asymmetric encryption algorithm (RSA), MD5, a symmetric encryption algorithm, or the like. A specific implementation of the encryption algorithm is not limited in this application.

In the foregoing implementation, performing trust authentication by the trusted chip on the component can resolve a disadvantage that the current server can perform trust authentication only on the CPU, and achieve an objective of performing trust authentication on the entire server. In addition, authentication on the component does not bring pressure to the authentication node.

In a possible implementation, the first key indicates integrity of the trusted chip, and the second key indicates integrity of the component. The integrity includes integrity of physical firmware, and further includes integrity of a software system.

During specific implementation, the first key may be stored in the trusted chip by using a one-time programmable memory (efuse), to implement integrity protection and secure storage of the key. The efuse has a one-time programmable feature. After the key is burnt into the efuse, if the third party programs the efuse by using an incorrect key in an incorrect manner, the efuse is to be fused (fused) and cannot be restored. In addition, the efuse of the chip usually stores information about the chip, for example, an available power voltage, a version number, and a production date of the chip. The chip reads data in the efuse in an initial power-on process. Therefore, storing the key in the efuse not only ensures integrity of the key, but also ensures that the trusted chip is not tampered with by the third party after delivery until the trusted chip is powered on. Similarly, the component may also perform similar processing on the second key. Details are not described herein again. It should be understood that the foregoing method for performing integrity protection and secure storage on the first key by using the efuse technology is used as an example for description. In this application, another secure storage technology may alternatively be used to ensure integrity of the first key.

Optionally, after the trust authentication performed by the trusted chip on the component succeeds, each component, the BMC, and a processor of the server may be powered on, loaded, and run. Otherwise, a stop-loss measure may be taken, for example, performing processing such as warning to notify an authentication failure or powering off the server.

In the foregoing implementation, after the trusted chip is tampered with or damaged by the third party, the first key may be damaged, and the first certificate generated by the damaged first key cannot pass the trust authentication of the authentication node. If the trusted chip is not tampered with or damaged by the third party, the first certificate generated by the first key is to pass the trust authentication. Similarly, after the component is tampered with or damaged by the third party, the second key may be damaged, and the second certificate generated by the damaged second key cannot pass the trust authentication of the trusted chip. In this way, the trust authentication performed by the trusted chip on the component is implemented, an objective of performing trust authentication on the entire server is further implemented, and the security of the server is improved.

In a possible implementation, the method further includes the following step: The trusted chip sends a first measurement request to the authentication node, where the first measurement request is used by the authentication node to perform trust measurement on the trusted chip. The trusted chip performs trust measurement on the component.

During specific implementation, the trusted chip may perform trust measurement on the server when the server is powered on for the first time, or may periodically perform trust measurement on the server in a running process of the server. The measurement refers to collecting a measurement report of the server in the running process, and analyzing and determining, according to a rule or a model, whether a system is illegally tampered with in the running process. For example, the measurement report may indicate a software and hardware status or a running feature in the running process of the server. When trust measurement is performed based on the measurement report, a software and hardware status parameter during running of the server may be compared with a preset reference value. If the parameter and the preset reference value are consistent, it indicates that the authentication succeeds, and the server is not illegally tampered with in the running process. If the parameter and the preset reference value are inconsistent, it indicates that the authentication fails, and the server may be illegally tampered with in the running process. It should be understood that the foregoing example is used for description, and the rule or the model used for trust measurement is not specifically limited in this application.

During specific implementation, the trusted chip may first send a trust measurement request to the authentication node, where the trust measurement request is used by the authentication node to perform trust measurement on the trusted chip. Then the trusted chip performs trust measurement on the component. The trust measurement request may include a measurement report of the trusted chip. When performing trust measurement on the component, the trusted chip may first obtain the measurement report of the component, and then perform verification on the measurement report based on a measurement model. If the verification succeeds, it indicates that the component is not tampered with by the third party in the running process of the server. The measurement model may be a measurement model locally downloaded by the trusted chip in advance. Alternatively, the trusted chip may be remotely connected to another verification node that has a measurement model to perform verification on the measurement report. This is not specifically limited in this application.

In the foregoing implementation, performing trust measurement by the trusted chip on the component can resolve a disadvantage that the current server can perform trust measurement only on the CPU, implement trust measurement on all components of the server, and prevent the third party from obtaining the control permission of the server by replacing a component, upgrading to or mirroring illegal software in the third phase (for example, a running, maintenance, or update phase of the server) in the lifecycle of the server. In addition, the trust measurement of the component does not bring a burden to the authentication node, so that feasibility of this application is high.

In a possible implementation, the method further includes the following step: The trusted chip clears sensitive data in the component when the component is replaced. Specifically, the method may include an operation such as locking or clearing the sensitive data in the component. This is not specifically limited in this application.

In the foregoing implementation, the sensitive data in the component may be locked or cleared when the component is scrapped, to prevent the third party from cracking the sensitive data in the component in the fourth phase (a phase such as a recycling phase or a scrapping phase) in the lifecycle of the server. In this way, trust protection of the full lifecycle of the server is implemented.

According to a second aspect, a chip is provided, where the chip is used in a server. The server includes the chip and a component, where the chip and the component establish a communication connection through a bus. The chip includes: a sending unit, configured to send an authentication request to an authentication node, where the authentication request is used by the authentication node to perform trust authentication on the chip; and an authentication unit, configured to perform trust authentication on the component, where the component includes an input/output I/O unit and a storage unit.

According to the chip described in the second aspect, after the trust authentication is performed by the authentication node on the chip, the chip performs trust authentication on the component, to implement integrity check on the entire server to resolve a problem that security of the server is low because a current server has a vulnerability in trust computing.

In a possible implementation, the authentication request includes a first certificate, the first certificate is generated by the chip based on a preset first key, and the first certificate is used by the authentication node to perform trust authentication on the first certificate based on a first preset certificate.

In a possible implementation, the authentication unit is configured to receive a second certificate sent by the component, where the second certificate is generated by the component based on a preset second key. The authentication unit is configured to perform trust authentication on the second certificate based on a second preset certificate.

In a possible implementation, the first key indicates integrity of the chip, and the second key indicates integrity of the component.

In a possible implementation, the chip includes a measurement unit. The sending unit is configured to send a first measurement request to the authentication node, where the first measurement request is used by the authentication node to perform trust measurement on the chip. The measurement unit is configured to perform trust measurement on the component.

In a possible implementation, the chip further includes a check unit, where the check unit is configured to perform integrity check on firmware of the chip before the sending unit sends the authentication request to a trust authentication node.

In a possible implementation, the chip further includes a desensitization unit, where the desensitization unit is configured to clear sensitive data in the component when the component is replaced.

In a possible implementation, the I/O unit includes a network adapter or a riser, and the storage unit includes one or more of a hard disk backplane, an Expander, and a PCIE switch.

In a possible implementation, the component includes a computing unit, an acceleration unit, a memory expansion unit and a cooling unit. The computing unit includes a CPU, a DDR, and a power supply. The acceleration unit includes a carrier and an acceleration card interconnection switch, where an acceleration card includes one or more of a graphics processing unit GPU, a DPU, and an NPU. The memory expansion unit includes a carrier, and further includes one or more of a memory expansion chip, a DIMM, and an SCM medium. The cooling unit includes one or two of air cooling and liquid cooling.

In a possible implementation, the chip is integrated into a baseboard management controller BMC chip of the server, or the chip is externally connected to the BMC chip.

According to a third aspect, a server is provided, where the server includes a trusted chip and a component. The trusted chip is configured to send an authentication request to an authentication node, where the authentication request is used by the authentication node to perform trust authentication on the trusted chip. The trusted chip is configured to perform trust authentication on the component, where the component includes an input/output I/O unit and a storage unit.

According to the server described in the third aspect, after the trust authentication is performed by the authentication node on the trusted chip in the server, the trusted chip performs trust authentication on the component, to implement integrity check on the entire server to resolve a problem that security of the server is low because a current server has a vulnerability in trust computing.

In a possible implementation, the I/O unit includes a network adapter or a riser, and the storage unit includes one or more of a hard disk backplane, an Expander, and a PCIE switch.

In a possible implementation, the component includes a computing unit, an acceleration unit, a memory expansion unit and a cooling unit. The computing unit includes a CPU, a DDR, and a power supply. The acceleration unit includes a carrier and an acceleration card interconnection switch, where an acceleration card includes one or more of a graphics processing unit GPU, a DPU, and an NPU. The memory expansion unit includes a carrier, and further includes one or more of a memory expansion chip, a DIMM, and an SCM medium. The cooling unit includes one or two of air cooling and liquid cooling.

In a possible implementation, the server includes a baseboard management controller BMC chip. The trusted chip is integrated into the BMC chip, and the trusted chip establishes a communication connection to the BMC chip by using a high-speed bus, where the high-speed bus includes one or more of a PCIE bus, a UB bus, and a CXL bus. Alternatively, the chip is externally connected to the BMC chip, and the trusted chip establishes a communication connection to the BMC chip by using an out-of-band bus, where the out-of-band bus includes a serial bus and a parallel bus.

According to a fourth aspect, a chip is provided, where the chip includes a service core and a security core. The security core is configured to run instructions to implement the methods according to the foregoing aspects, and a management core is configured to run instructions to implement a management function.

According to a fifth aspect, a chip is provided, where the chip includes a computing unit and a memory. The memory is configured to store code, and the computing unit is configured to execute the code to implement the methods according to the foregoing aspects.

According to a sixth aspect, a computer-readable storage medium is provided. The computer-readable storage medium stores instructions, and when the instructions are run on a computer, the computer is enabled to perform the methods according to the foregoing aspects.

According to a seventh aspect, a computer program product including instructions is provided, including a computer program or the instructions. When the computer program or the instructions are run on a computer, the computer is enabled to perform the methods according to any possible implementation of the first aspect to the foregoing method embodiments.

In this application, based on the implementations provided in the foregoing aspects, the implementations may be further combined to provide more implementations.

### BRIEF DESCRIPTION OF DRAWINGS

FIG. 1 is a framework diagram of a requirement on a trust capability of a server;
FIG. 2 is a schematic diagram of a structure of a trust computing system according to this application;
FIG. 3 is a schematic diagram of a structure of a trusted chip according to this application;
FIG. 4 is a schematic diagram of a logical architecture of a trust computing system according to this application;
FIG. 5 is a schematic flowchart of steps of a trust computing method according to this application;
FIG. 6 is a schematic flowchart of steps of a trust computing method in a full lifecycle of a server according to this application;
FIG. 7 is a schematic diagram of a structure of a chip according to this application; and
FIG. 8 is another schematic diagram of a structure of a chip according to this application.

### DESCRIPTION OF EMBODIMENTS

The following describes the technical solutions in embodiments of the present invention with reference to the accompanying drawings in embodiments of the present invention. It is clear that the described embodiments are merely a part rather than all of embodiments of the present invention. All other embodiments obtained by a person of ordinary skill in the art based on embodiments of the present invention without creative efforts shall fall within the protection scope of the present invention.

First, a new server architecture provided in this application is explained and described.

Mainboard development of a conventional server has high technical requirements. In addition to a central processing unit (central processing unit, CPU), functions such as bus fan-out, power fan-out, and maintenance and management are also included. These CPU-related circuits on the mainboard are based on reference designs provided by CPU vendors. However, the reference designs provided by different CPU vendors are completely different. As a result, a large amount of resources and time need to be devoted to mainboard development and design. To meet a requirement of rapid update and upgrade of computing products such as servers, server vendors need to devote substantial efforts to differentiated innovation. However, the server vendors usually can focus only on low-level hardware specification comparison. This cannot meet customers' requirements for diversified scenarios and computing power, and the server vendors are forced to get into inefficient homogeneous competition. With a trend of computing power diversity, more processor vendors emerge and launch more processor products with different architectures. As a result, an iteration speed of various processors increases rapidly. In addition, power consumption of the processor is continuously increased, and a cooling technology of the conventional server cannot meet a requirement. Furthermore, to improve system performance, the industry has launched new medium types and forms (for example, Intel launches a 3D Xpoint new-type non-volatile medium). The new medium types and forms also need to be supported by and adapt to new architectures. To develop a server that adapts to the foregoing technology trend, the server vendors require a huge development workload. However, due to differences between different products, a design solution of one mainboard or one server cannot be reused. Therefore, the entire industry has higher requirements on cross-architecture component sharing, cross-generation evolution, time to market (time to market, TTM) shortening, and total cost of operation (total cost of operation, TCO) reduction. To further develop the industry, a more open and standardized server architecture needs to be constructed, development efficiency needs to be improved, component reusability needs to be improved, and more flexibility and differentiation need to be provided.

This application provides an innovative peer-to-peer interconnection architecture (which may also be referred to as a new server architecture or a new architecture). In this architecture, a conventional mainboard is first divided into a basic computing unit (Basic Computing Unit, BCU) and an extension unit (Extension Unit, EXU). The basic computing unit and the extension unit are used together to support specifications and forms of mainboards needed in different scenarios. In addition, one computing device may include one basic computing unit and one extension unit. One computing device may alternatively include a plurality of basic computing units and one extension unit. One computing device may alternatively include one basic computing unit and a plurality of extension units. The basic computing unit includes a CPU, a double data rate (double data rate, DDR), and a related power supply, and provides a general computing capability and expansion interfaces such as a peripheral storage expansion interface, an input/output (input/output, I/O) expansion interface, and an acceleration expansion interface. The basic computing unit supports CPUs of different series, such as Kunpeng^{®}, Intel^{®}, and AMD^{®}. Optionally, the basic computing unit supports a heterogeneous processor, in other words, the basic computing unit may support different types of processors. For example, the basic computing unit supports a CPU, and any one or any combination of processors such as an application-specific integrated circuit (application-specific integrated circuit, ASIC), a programmable logic device (programmable logic device, PLD), a complex program logic device (complex programmable logic device, CPLD), a field programmable gate array (field programmable gate array, FPGA), generic array logic (generic array logic, GAL), a system on chip (system on chip, SoC), a software-defined infrastructure (software-defined infrastructure, SDI) chip, and an artificial intelligence (artificial intelligence, AI) chip.

Further, based on a service requirement and a hardware attribute, embodiments of this application provide at least six different forms of basic computing units, which are respectively configured for different computing performance and memory. For ease of description, the six basic computing units are respectively referred to as A1, A2, B1, B2, C1, and C2. In addition, in embodiments, "P" represents a quantity of processors, and P is an integer greater than 0. "DPC" represents a dual in-line memory module per channel (dual in-line memory module per channel, DΠVIM Per Channel). For example, a basic computing unit in the A1 form supports one processor, and each channel is inserted with one DΠVIM (1P1DPC for short). A basic computing unit in the A2 form supports one processor, and each channel is inserted with one or two DIMMs (1P1DPC or 1P2DPC for short). A basic computing unit in the B1 form supports two processors, and each channel is inserted with one DΠVIM (2P1DPC for short); or the basic computing unit in the B1 form supports one processor, and each channel is inserted with one or two DIMMs (1P1DPC or 1P2DPC for short). A basic computing unit in the B2 form supports two processors, and each channel is inserted with one or two DIMMs (2P1DPC or 2P2DPC for short); or the basic computing unit in the B2 form supports one processor, and each channel is inserted with one or two DIMMs (1P1DPC or 1P2DPC for short). A basic computing unit in the C1 form supports four processors, and each channel is inserted with one DΠVIM (4P1DPC for short); or the basic computing unit in the C1 form supports two processors, and each channel is inserted with one or two DIMMs (2P1DPC or 2P2DPC for short). A basic computing unit in the C2 form supports four processors, and each channel is inserted with one or two DIMMs (4P1DPC or 4P2DPC for short); or the basic computing unit in the C2 form supports two processors, and each channel is inserted with one or two DIMMs (2P1DPC or 2P2DPC for short). With the development of technologies, a CPU package dimension, a quantity of memory channels, and a quantity of DIMMs may change, but a standard dimension and an installation hole of the mainboard remain unchanged. This ensures that the basic computing unit can compatibly perform cross-generation and cross-series evolution during upgrade of the basic computing unit. For example, when each CPU on the basic computing unit in the B2 form supports eight DDR channels, the basic computing unit supports 2P2DPC (2P32DIMM). After the quantity of CPU memory channels is increased to 12, 2P2DPC (2P48DIMM) cannot be implemented. In this way, the B2 form may support 2P1DPC (2P24DIMM), and 2P2DPC (2P48DIMM) may be implemented by using another form such as C1. Because a position of the installation hole and the basic computing unit dimension are standard, replacement and installation can be implemented directly.

The extension unit includes a baseboard management controller (Baseboard Management Controller, BMC) chip, a management system, and a bridge chip (for example, a platform controller hub (Platform Controller Hub, PCH) of an Intel system). The extension unit is a management expansion of the basic computing unit, and serves as a management center of an entire system, to provide functions such as device management, security management, energy efficiency management, and reliability management. The BMC may also be referred to as a baseboard management controller.

In the new architecture, the basic computing unit is communicatively connected to a component by using a high-speed bus such as a PCIE bus, a compute express link (Compute Express Link, CXL), or a unified bus (unified bus, UB or Ubus), and is connected to an extension unit by using a management interface. During specific implementation, a specific connection manner between the basic computing unit and the component, and a specific connection manner between the basic computing unit and the extension unit include: a soft connection manner in which the foregoing connection is implemented by using a cable, or a hard connection manner in which the foregoing connection is implemented by using a connector. Further, the component is a general term of a type of component or device. Based on different functions, the component includes a storage unit (Storage Unit, STU), an I/O unit (Input/Output Unit, IOU), an acceleration unit (Acceleration Unit, ACU), a memory expansion unit (Memory Expansion Unit, MEU), a cooling unit, a computing unit, a management unit, and the like. The basic computing unit supports different series of CPUs, such as Kunpeng, Intel^{®}, and AMD^{®}. The extension unit provides a management function and supplies power for the basic computing unit and each expansion unit. With the support of the extension unit, various power supplies and heat sinks can be selected.

It should be noted that a basic computing unit or an extension unit that includes components such as a processor, a memory, and a baseboard management controller may also be used as one type of component.

The storage unit includes a hard disk backplane, an extension unit (Expander), a PCIE switch (switch), and the like. The storage unit is used for system storage expansion and supports a plurality of media and forms such as a mechanical hard disk (hard disk drive, HDD), a solid-state-drive (solid-state-drive, SSD), a non-volatile memory express (Non-Volatile Memory express, NVMe), or storage class memory (Storage Class Memory, SCM).

The I/O unit includes a component such as a riser, implements system I/O expansion, and supports a PCIE standard card and an open compute project (Open Compute Project, OCP) card.

The acceleration unit includes a riser, a carrier board, an acceleration card interconnection switch (switch), and the like, and provides system acceleration unit expansion and interconnection functions.

The memory expansion unit includes a carrier board, a memory expansion chip, a dual in-line memory module (dual in-line memory module, DIMM), an SCM medium, and the like, and provides a system memory bandwidth and content capacity expansion function.

The cooling unit is configured to cool the computing device or hardware in the computing device, and includes a cooling unit that uses an air cooling manner, a cooling unit that uses a liquid cooling manner, or a cooling unit that uses both the air cooling manner and the liquid cooling manner. It should be understood that a structure, a type, and a quantity of the cooling units do not constitute a limitation on the technical solutions to be protected in this application.

The computing unit is a component that provides a general computing capability, for example, a central processing unit (central processing unit, CPU), and a memory.

The management unit is a component that provides device management, for example, a baseboard management controller.

In addition, in a conventional server architecture, due to a power supply, a memory channel quantity, an I/O quantity, a rate, and another evolution reason, a socket (Socket) of a processor (for example, a CPU) can be compatible only with each generation (two small upgrades of Tick/Tock), and it is difficult to achieve cross-generation compatibility. The mainboard provided in this application may be provided with an external interface in a standardized manner, and various external expansions may be performed in a soft connection manner such as using a cable. This can avoid differences caused by interconnection between a processor-related power supply, different processors, and components and differences caused by interconnection between components. In this way, changes of components such as the memory are only included in the mainboard, to implement a cross-generation compatibility function of the mainboard. In this way, for each vendor, when the processor is updated and upgraded, a matching server, a matching component, and the like may not be replaced. Therefore, the matching component has a longer lifecycle. Customers can replace with the latest components at any time without replacing a chassis or increasing a hardware development workload, and use the latest computing power in the industry as soon as possible. After cross-generation upgrade and cross-series evolution of the new server architecture are implemented, the server vendors only need to replace the basic computing unit in a simple way to upgrade the processor or change to a different processor vendor. This completely changes an original development mode and derives a new industry mode.

In embodiments, the new server architecture is provided. In addition, to support diversified computing power and diversified devices, the new server architecture is used to further implement hardware standardization, including basic computing unit standardization and component interface standardization.

The basic computing unit standardization includes standardization of a dimension, an installation hole, an electrical feature of an interface, a management interface protocol, and a parameter. Table 1 is an example of a basic computing unit interface description table according to this application.

**Table 1 Example of descriptions of a basic computing unit interface according to this application**

| Interface name | Interface type | Function description |
|---|---|---|
| Power supply interface | 12 V | 12 V main power input of the basic computing unit |
| High-speed interface | PCIE/Flexible input/output (Flexible I/O) | High-speed I/O interface of the CPU on the basic computing unit: The high-speed interface uses a UBC (x8) or UBC-DD (x16) connector. |
| | | Flexible I/O: Some CPUs support flexible configuration of some high-speed interfaces as a Huawei cache coherence system (Huawei Cache Coherence System, HCCS) interface, a serial attached small computer system interface (Serial Attached Small Computer System Interface, SAS), a serial advanced technology attachment (Serial Advanced Technology Attachment, SATA) interface, an Ethernet interface, or the like. |
| BCU management interface | (1) High-speed input/output interface including a high-speed serial interface (high speed serial port, Hi SPort); | Low-speed I/O interface on the basic computing unit, used for basic computing unit management and interconnection and communication between the basic computing unit and the extension unit. Definition of the management interface is compatible with a plurality of platforms, for example, Kunpeng, Feiteng^{®}, AMD^{®}, and Intel^{®}. |
| | (2) Inter-integrated circuit (Inter-Integrated Circuit, IIC, or I2C); | |
| | (3) Universal asynchronous receiver/transmitter (Universal Asynchronous Receiver/Transmitter, UART); | |
| | (4) Joint test action group (Joint Test Action Group, JTAG); | |
| | (5) Low pin count bus (Low pin count Bus, LPC); | |
| | (6) Serial peripheral interface (Serial Peripheral Interface, SPI); | |
| | (7) Universal serial bus (Universal Serial Bus, USB); | |
| | (8) Direct media interface (Direct Media Interface, DMI)/PCIE | |
| | (9) Network controller sideband interface (Network Controller Sideband Interface, NCSI) | |
| | (10) 3.3 V standby power supply (STBY 3V3) MISC | |

The power supply uses a unified 12 V input. Inside the basic computing unit, the power supply is converted into various power supplies through DC/DC. Considering evolution of I/O in the future and differentiation of different CPUs, this embodiment defines a flexible I/O interface based on a UBC connector and a UBCDD connector, to replace an original PCIE interface. The flexible I/O interface may be flexibly configured as a PCIE/HCCS/SAS/SATA/Ethernet interface based on a requirement. The BCU management interface includes a common low-speed maintenance interface, such as I2C, UART, and JTAG interfaces, and is compatible with management of common processor platforms.

Standardization of an internal component interface of the computing system: The component includes an extension unit, a power supply component, a cooling unit, a storage unit, an I/O unit, an acceleration unit, a memory component, and the like. An electrical interface, a management interface, and a parameter of the component are standardized without defining or restricting a physical dimension, installation, and a position of the component. This provides a large innovation space and supports differentiation and flexible expansion. In addition to the power supply and a high-speed signal, definitions of other low-speed management interfaces in the component external interfaces are shown in the following Table 2.

**Table 2 Example of a component low-speed management interface definition table according to this application**

| Interface name | Interface type | Function description |
|---|---|---|
| Management interface between the EXU and the BCU | HiSPort, I2C, UART, JTAG, LPC, SPI, USB, DMI/PCIE, NCSI, STBY 3V3, MISC | Used to connect to the basic computing unit. Low-speed I/O interface on the basic computing unit, used for basic computing unit management and interconnection and communication between the basic computing unit and the extension unit. The definition of the management interface is compatible with a plurality of platforms, for example, x86 and Kunpeng. |
| Management interface of the STU/IOU and the like | I2C, JTAG, STBY 3V3 | Management interface of the storage unit or the I/O unit |
| BMC external interface | GE, VGA, USB, UART, PWR BTN, UID BTN | External interface of a BMC management unit |

Except the interfaces between the EXU and the BCU, other interfaces are connected to each component through the EXU. It should be noted that this embodiment defines only functions of these interfaces, and does not limit a specific pin layout (PINMAP) manner. Any implementation that can implement the functions falls within the protection scope of this embodiment.

It should be noted that content in Table 1 and Table 2 is merely an example provided for assisting in explaining the technical solutions of this application. During specific implementation, the new server architecture, the interface of the basic computing unit, and a low-speed interface of a functional component may each include more or less content.

In addition, this application further provides intelligent management software. A management object template is implemented based on a standardization requirement of a new server architecture. After the server is powered on, by using a standard management bus, management software automatically detects a component and obtains self-description information of the component. Then the management software creates a management object instance based on the management object template, to implement adaptive management of the management software, implement the intelligent management software, and support automatic discovery and automatic adaptation of the component.

Then, an application scenario of "trust computing" in this application is described.

The trust computing is a technical means used to ensure integrity of a system and an application of a server and ensure that the system and the application of the server are run in a trust status expected by a design objective. The trust computing can ensure that the server has a trust protection capability in a full lifecycle, and prevent a third party from obtaining a capability of controlling a computing system.

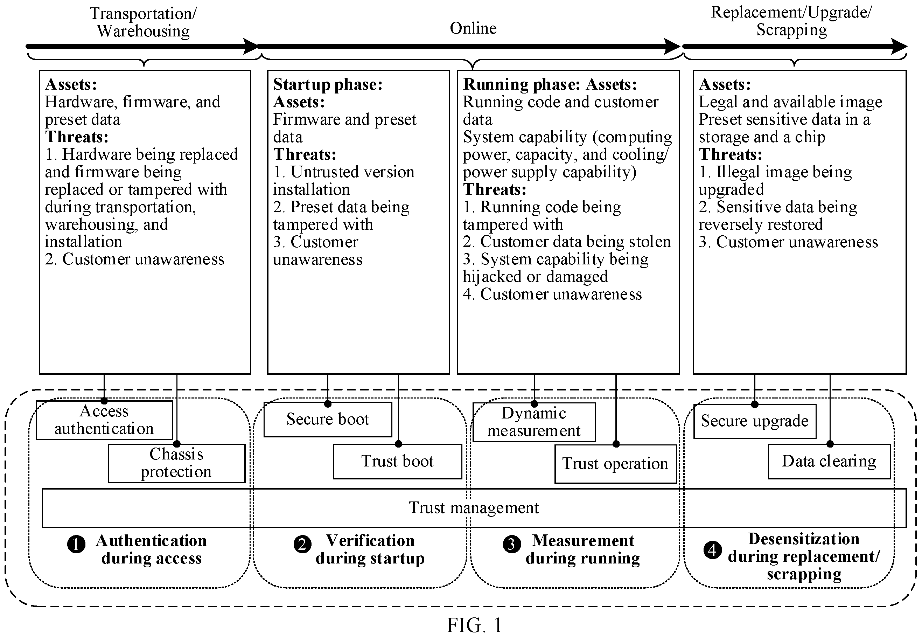

FIG. 1 is a requirement framework diagram of trust capabilities of a server. Usually, as shown in FIG. 1, a full lifecycle of the server includes four phases. The first phase is a transportation and warehousing phase. In this phase, the third party may obtain a capability of obtaining the highest permission of a computing system by replacing hardware or tampering with firmware. The second phase is a startup and access phase. In this phase, the third party may obtain a capability of controlling the highest permission of the computing system by replacing or tampering with software and hardware, tampering with preset data, and the like. The third phase is a running phase. In this phase, the third party may obtain the capability of controlling the highest permission of the computing system by tampering with running code, damaging a system capability, and the like. The fourth phase is a scrapping phase. The third party may obtain sensitive data of a customer through reverse recovery and other means. Therefore, the trust protection capabilities are needed throughout the full lifecycle of the server. Specifically, the trust protection capabilities include an access authentication capability, a secure power-on and boot capability, a dynamic measurement capability during running, and a trust protection capability during component upgrade and scrapping.

However, a current trust computing system usually uses a main service processor (namely, a CPU) as a core, and a trust computing chip configured to implement trust protection of the server is integrated inside the CPU or externally connected to the CPU. Because the trust computing chip depends on the main service processor, when the main service processor is not powered on, vulnerabilities exist in the trust protection capabilities in the first phase and the fourth phase. In addition, it is difficult for the trust computing chip integrated in the main service processor to implement perfect resource isolation between a trust computing resource and a service processing resource, and a requirement on an isolation design technology is high, resulting in a high design threshold for the trust computing.

In addition, it can be learned from the foregoing content that, with the background of great development of massive data, big data analysis, machine learning, and artificial intelligence, GPUs, DPUs, and NPUs are widely used, and complexity of server hardware devices is significantly improved. The server includes not only a service processing system but also a management system of a chip such as a GPU. However, current trust computing can only enable a main service processor to have a trust protection capability, and cannot perform trust protection on other components in the computing system, such as an I/O unit, a storage unit, and a GPU chip component. If the trust protection needs to be performed on the other components, a corresponding trust computing chip needs to be separately deployed for each component. As a result, not only costs are high, but also a large quantity of system resources are occupied. Therefore, the current trust computing cannot perform integrity check on the entire server.

It can be learned from the above that, because the chip is integrated into the CPU of the server, and it is difficult to isolate the trust computing resource and the service processing resource, the current trust computing has a high design threshold, is highly dependent on the CPU, and cannot perform trust protection when the CPU is not powered on. In addition, the current trust computing cannot perform integrity check on the entire server. As a result, a vulnerability exists in the trust protection of the current server, and security performance of the server is low.

The present invention provides a trust computing solution based on the foregoing new server architecture. In this solution, a trusted chip is integrated into or externally connected to a BMC chip in the new server architecture, so that trust protection on a server no longer depends on a CPU of the server, and trust protection can be performed on the server regardless of whether the CPU is powered on. This implements isolation between a service processing resource and a trust computing resource, and reduces a design threshold. In addition, after the trusted chip is authenticated by an authentication node as "trusted", the trusted chip can perform trust verification on various components of the server, to implement integrity check on the entire server to resolve a problem that security of the server is low because a vulnerability exists in trust computing of the current server.

The following describes the technical solutions provided in this application in detail with reference to the accompanying drawings.

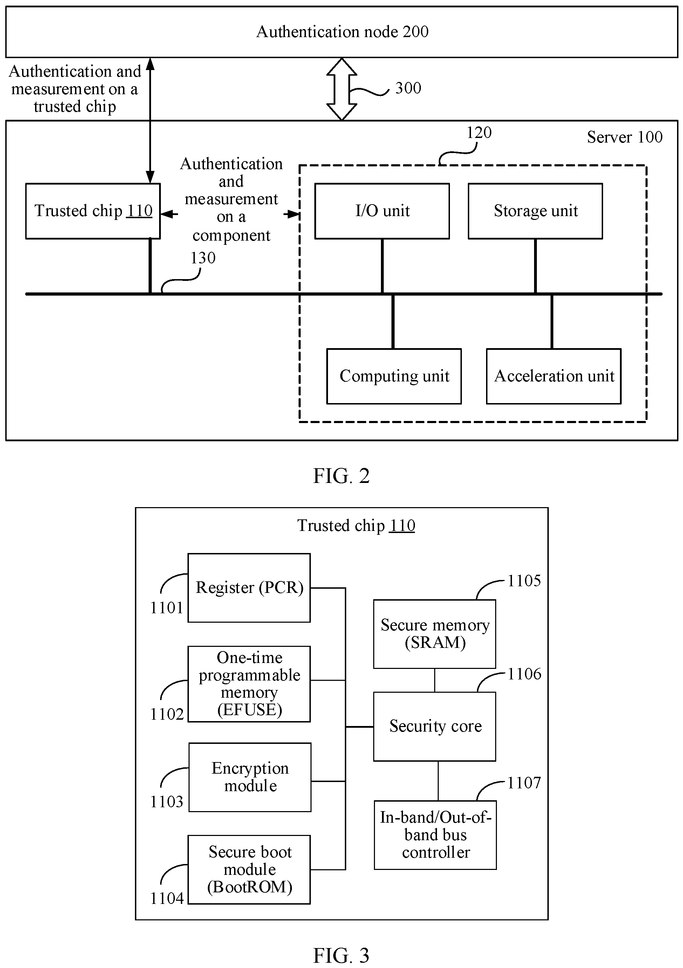

FIG. 2 is a schematic diagram of a structure of a trust computing system according to this application. As shown in FIG. 2, the trust computing system includes a server 100 and an authentication node 200. There may be one or more servers 100. In FIG. 2, one server 100 is used as an example for description. This is not specifically limited in this application. A connection may be established between servers 100 and between the server 100 and the authentication node 200 by using a network 300. Specifically, the network 300 may be a wired network or a wireless network, for example, an Ethernet or a UBUS-N bus. This is not specifically limited in this application.

The authentication node 200 may be a physical server such as an X86 server or an ARM server, or may be a virtual machine (virtual machine, VM) implemented based on a general-purpose physical server in combination with a network functions virtualization (network functions virtualization, NFV) technology. The virtual machine is a software-simulated complete computer system that has a complete hardware system function and that runs in a completely isolated environment. This is not specifically limited in this application. During specific implementation, the authentication node 200 is configured to receive an authentication request or a measurement request sent by the server 100, and perform trust authentication or trust measurement based on the authentication request or the measurement request.

The server 100 may be a physical server. An architecture of the server is the new architecture in the foregoing content. In the architecture, a mainboard of the server is split into a basic computing unit, an extension unit, and a component. For descriptions of the new architecture, the basic computing unit, the extension unit, and the component, refer to the foregoing content. Details are not described herein again. During specific implementation, the server 100 may be a single server, or may be a node in a server cluster. This is not specifically limited in this application. Optionally, the server 100 may alternatively be a storage server or an edge computing device. An architecture of the storage server and an architecture of the edge computing device are the new architecture in the foregoing content.

Further, the server 100 may be divided into a plurality of units and modules. For example, as shown in FIG. 2, the server 100 includes a trusted chip 110 and a component 120. A communication connection is established between the trusted chip 110 and the component 120 through a bus 130. There may be one or more components 120. In FIG. 2, four components (an I/O unit, a storage unit, a processor, and an acceleration unit) are used as an example for description. A type and a quantity of the components are not specifically limited in this application.

The trusted chip 110 may include an interface and a processor. The processor may include an integrated circuit and/or a component. The integrated circuit may be a programmable logic device (programmable logic device, PLD) or a combination thereof. The PLD is a complex programmable logic device (complex programmable logic device, CPLD), a field programmable gate array (field programmable gate array, FPGA), generic array logic (generic array logic, GAL), or any combination thereof. The trusted chip 110 may further include a mainboard used for a printed processor, where the mainboard is also referred to as a printed circuit board (printed circuit board, PCB). Optionally, the trusted chip 110 may be a processor of an advanced reduced instruction set computing machine (advanced RISC machine, ARM) architecture.

The component 120 may include a storage unit, an I/O unit, an acceleration unit, and a computing unit. The I/O unit includes a network adapter or a riser. The storage unit includes one or more of a hard disk backplane, an Expander, and a PCIE switch. Optionally, the component further includes a computing unit, an acceleration unit, a memory expansion unit and a cooling unit. The computing unit includes a CPU, a DDR, and a power supply. The acceleration unit includes a carrier and an acceleration card interconnection switch, where an acceleration card includes one or more of a graphics processing unit GPU, a DPU, and an NPU. The memory expansion unit includes a carrier, and further includes one or more of a memory expansion chip, a DIMM, and an SCM medium. The cooling unit includes one or two of air cooling and liquid cooling.

Simply speaking, the I/O unit and the acceleration unit may be the I/O unit and the acceleration unit in the foregoing descriptions of the new server architecture, the storage unit includes the storage unit and the memory expansion unit in the foregoing descriptions of the new server architecture, and the computing unit is the basic computing unit in the foregoing descriptions of the new server architecture. It should be understood that, for ease of understanding, in this application, the basic computing unit is classified as the component 120 as a computing unit. The component may be further classified in more manners. For example, the component 120 may further include the cooling unit in the foregoing content. Specifically, classification may be performed based on an actual service processing scenario. This is not specifically limited herein.

Optionally, the trusted chip 110 may be integrated into the BMC chip in the foregoing content, and may also be referred to as an intelligent baseboard management controller (intelligent baseboard management controller, iBMC) or a baseboard management controller. It can be learned with reference to the foregoing content that the BMC chip is located on the extension unit of the new-architecture server, and is a management expansion of the basic computing unit. As a management center of the entire system, the BMC chip is a server embedded management system oriented to a full lifecycle of the server, and provides a series of management tools for hardware status monitoring, deployment, energy saving, and security.

The bus 130 may include an out-of-band bus and a high-speed bus. The high-speed bus may include a high-speed bus such as a PCIE, a CXL, or a UB. The out-of-band bus may be a serial peripheral interface (serial peripheral interface, SPI) bus, a system management bus (system management bus, SMBUS), an RS202C bus, an RS422C bus, a USB bus, or the like. This is not specifically limited in this application.

When the trusted chip 110 is integrated into the BMC chip, the trusted chip 110 is communicatively connected to the I/O unit, the storage unit, and the acceleration unit by using the out-of-band bus, for example, the SPI bus or the SMBUS bus. A corresponding out-of-band bus controller may alternatively be deployed in the trusted chip 110, to communicatively connect to the I/O unit, the storage unit, and the acceleration unit. The trusted chip 110 is communicatively connected to the computing unit by using the high-speed bus, for example, the PCIE bus or the UB bus. A corresponding high-speed bus controller, for example, a PCIE endpoint (endpoint, EP) controller or a UB EP controller, may alternatively be deployed in the trusted chip 110. This is not specifically limited in this application. The bus 130 between the CPU and the trusted chip 110 may include a management interface, where a type of the management interface may include GE, VGA, USB, UART, PWR BTN, UID BTN, and the like. For specific descriptions of the management interface, refer to Table 2 in the foregoing content. Details are not described herein again.

When the trusted chip 110 is externally connected to the BMC chip in the foregoing content, the trusted chip 110 establishes a communication connection to the BMC chip, the storage unit, the I/O unit, and the acceleration unit by using the out-of-band bus, for example, the SPI bus or the SMBUS bus. A corresponding out-of-band bus controller is deployed in the trusted chip to implement the foregoing communication connection. The trusted chip 110 establishes a communication connection to the computing unit (for example, the CPU) by using the high-speed bus, for example, the PCIE bus or the UB bus. This is not specifically limited in this application.

It may be understood that, in this application, the trusted chip 110 is integrated into or externally connected to the BMC chip, where the BMC chip is the embedded management system oriented to the full lifecycle of the server. In this way, trust computing no longer depends on a service server (the CPU), and even if the CPU is not powered on, trust protection on the server can be performed by using the BMC chip. In this way, trust protection can be performed on the server when the CPU is not powered on (for example, in an installation, transportation, or scrapping phase in the full lifecycle). In addition, because the BMC chip and the CPU have an advantage of resource isolation, resource isolation does not need to be considered for trust computing, so that a design threshold is reduced and a dual-system security architecture with independent hardware protection is implemented.

In this embodiment of this application, when the BMC is started, the trusted chip 110 may verify firmware in a secure and trust boot manner, to ensure integrity of the firmware of the trusted chip 110, and to prevent a third party from obtaining control permission of the server by replacing the firmware in the first phase (for example, warehousing or transportation) in the lifecycle of the server. During specific implementation, power-on boot protection may be implemented by using BSBC software. The trusted chip 110 may be set to be unchangeable after delivery, and may support a user-defined secure boot policy. Code security protection is set based on a service requirement. A specific implementation of firmware check is not limited in this application. After the firmware integrity check succeeds, the BMC chip may be started. Otherwise, processing such as warning to notify that the firmware is incomplete or powering off the server is performed.

In this embodiment of this application, after the BMC is started, the trusted chip 110 may perform access trust authentication on the server, to prevent the third party from obtaining control permission of the server in the second phase (for example, an installation, debugging, or startup phase) in the lifecycle of the server by installing or replacing with illegal software and hardware. During specific implementation, the trusted chip 110 is configured to send the authentication request to the authentication node 200, where the authentication request is used by the authentication node 200 to perform trust authentication on the trusted chip 110. The trusted chip 110 is further configured to perform trust authentication on the component 120. It may be understood that, after trust authentication performed by the trusted chip 110 on the component 120 succeeds, each component, the BMC, and a processor of the server may be powered on, loaded, and run. Otherwise, a stop-loss measure may be taken, for example, performing processing such as warning to notify an authentication failure or powering off the server.

It should be noted that, after the BMC is started, the trusted chip 110 first sends the authentication request to the authentication node 200 for trust authentication, and after the authentication succeeds, the trusted chip 110 performs trust authentication on the component 120. In this way, a case in which a tampered trusted chip 110 performs trust authentication on the component 120 is avoided, and accuracy of the trust authentication of the server is improved.

Optionally, the trusted chip 110 may be preconfigured with a first key, and the authentication node 200 is configured with a first preset certificate used to perform trust authentication on the trusted chip 110. After the BMC is started, the trusted chip 110 may generate a first certificate based on the first key, and then send, to the authentication node 200, an authentication request carrying the first certificate. The authentication node 200 may perform trust authentication on the first certificate based on the preset first preset certificate. If the authentication succeeds, it indicates that the trusted chip 110 is not tampered with, and is a chip having integrity and security. If the authentication fails, it indicates that the trusted chip is tampered with.

Optionally, the component 120 may be preconfigured with a second key, and the trusted chip 110 is configured with a second preset certificate used to perform trust authentication on the component 120. After the trusted chip 110 is authenticated by the authentication node 200 as "trusted", the component 120 may generate a second certificate based on the second key. The trusted chip 110 receives the second certificate sent by the component 120, and performs trust authentication on the second certificate based on the preset second preset certificate. If the authentication succeeds, it indicates that the component 120 is not tampered with, and is a component having integrity and security. If the authentication fails, it indicates that the component is tampered with. The second preset certificate may be burnt into the chip at delivery of the trusted chip 110.

It should be noted that the first key and the second key may be private keys in an encryption algorithm, and the first preset certificate and the second preset certificate may be public key certificates in the encryption algorithm. The trusted chip 110 generates a signature and the first certificate based on the first key (private key), and sends, to the authentication node 200, the first certificate carrying the signature. The authentication node 200 may perform a signature verification operation on the received first certificate by using the first preset certificate (public key certificate), to implement trust authentication on the trusted chip 110. Similarly, the component 120 may also generate a signature and the second certificate based on the second key (private key), and sends, to the trusted chip 110 for trust authentication, the second certificate carrying the signature. Details are not described herein again. The encryption algorithm may be an asymmetric encryption algorithm (RSA), MD5, a symmetric encryption algorithm, or the like. A specific implementation of the encryption algorithm is not limited in this application.

Optionally, the first key indicates integrity of the trusted chip 110. The integrity includes integrity of physical firmware of the trusted chip 110, and further includes integrity of a software system on the trusted chip 110. The trusted chip 110 may perform integrity protection and secure storage on the first key. In this way, after the trusted chip 110 is tampered with or damaged by the third party, the first key is damaged and indicates that the integrity of the trusted chip 110 is low, and the first certificate generated by using the damaged first key cannot pass the trust authentication of the authentication node 200. If the trusted chip 110 is not tampered with or damaged by the third party, the integrity of the trusted chip 110 is high, and the first certificate generated by using the first key is to pass the trust authentication. Similarly, the second key indicates integrity of the component 120. The integrity includes integrity of physical firmware of the component 120, and further includes integrity of a software system on the component 120. The component 120 may also perform similar processing on the second key. Details are not described herein again.

During specific implementation, the first key may be stored in the trusted chip by using a one-time programmable memory (efuse), to implement integrity protection and secure storage of the key. The efuse has a one-time programmable feature. After the key is burnt into the efuse, if the third party programs the efuse by using an incorrect key in an incorrect manner, the efuse is to be fused (fused) and cannot be restored. In addition, the efuse of the chip usually stores information about the chip, for example, an available power voltage, a version number, and a production date of the chip. The chip reads data in the efuse in an initial power-on process. Therefore, storing the key in the efuse not only ensures integrity of the key, but also ensures that the trusted chip 110 is not tampered with by the third party after delivery until the trusted chip 110 is powered on. Similarly, the component 120 may also perform similar processing on the second key. Details are not described herein again. It should be understood that the foregoing method for performing integrity protection and secure storage on the first key by using the efuse technology is used as an example for description. In this application, another secure storage technology may alternatively be used to ensure integrity of the first key.

It may be understood that, in this application, performing trust authentication by the trusted chip 110 on the component 120 can resolve a disadvantage that the current server can perform trust authentication only on the CPU, and achieve an objective of performing trust authentication on the entire server. In addition, authentication on the component does not influence the authentication node 200, so that feasibility of this application is high.

In this embodiment of this application, the trusted chip 110 may perform running trust measurement on the server in a power-on running process of the server, to prevent the third party from obtaining control permission of the server by replacing a component or upgrading to illegal image software in the third phase (for example, a server running, maintenance, or update phase) in the lifecycle of the server. The measurement refers to collecting a measurement report of the server in the running process, and analyzing and determining, according to a rule or a model, whether a system is illegally tampered with in the running process. For example, the measurement report may indicate a software and hardware status or a running feature in the running process of the server. When trust measurement is performed based on the measurement report, a software and hardware status parameter during running of the server may be compared with a preset reference value. If the parameter and the preset reference value are consistent, it indicates that the authentication succeeds, and the server is not illegally tampered with in the running process. If the parameter and the preset reference value are inconsistent, it indicates that the authentication fails, and the server may be illegally tampered with in the running process. It should be understood that the foregoing example is used for description, and the rule or the model used for trust measurement is not specifically limited in this application.

During specific implementation, the trusted chip 110 may first send a trust measurement request to the authentication node 200, where the trust measurement request is used by the authentication node 200 to perform trust measurement on the trusted chip 110. Then the trusted chip performs trust measurement on the component 120. The trust measurement request may include a measurement report of the trusted chip 110. When performing trust measurement on the component 120, the trusted chip 110 may first obtain the measurement report of the component 120, and then perform verification on the measurement report based on a measurement model. If the verification succeeds, it indicates that the component 120 is not tampered with by the third party in the running process of the server. The measurement model may be a measurement model locally downloaded by the trusted chip 110 in advance. Alternatively, the trusted chip 110 may be remotely connected to another verification node that has a measurement model to perform verification on the measurement report. This is not specifically limited in this application.

It may be understood that, in this application, performing trust measurement by the trusted chip 110 on the component 120 can resolve a disadvantage that the current server can perform trust measurement only on the CPU, implement trust measurement on all components of the server, and prevent the third party from obtaining user data or control permission of the server by tampering with a component other than the CPU in the running process of the server. In addition, the trust measurement on the component does not bring a burden to the authentication node 200, so that feasibility of this application is high.

In this embodiment of this application, when the component 120 is replaced, the trusted chip 110 may perform scrapping on the component. Specifically, the scrapping may include an operation such as locking or clearing sensitive data in the component 120, to prevent the third party from cracking the sensitive data in the component in the fourth phase (a phase such as a recycling phase or a scrapping phase) in the lifecycle of the server. In this way, trust protection of the full lifecycle of the server is implemented.

During specific implementation, a root of trust may be deployed in the component 120, and operations such as access trust authentication and running trust measurement of the component 120 may be implemented by using the root of trust. The root of trust may be a hardware chip, and may be integrated inside the component or externally connected to the component, to support the access trust authentication operation and the running trust measurement operation on the component 120.

It may be understood that, in a manner of deploying the root of trust on the component 120, a trust computing function is implemented by the root of trust, so that the trust authentication operation and the running trust measurement operation on the component do not influence service processing of the component 120. In addition, the trust authentication and the running trust measurement on the component 120 are actually performed by the trusted chip 110, so that trust complexity of the component is reduced and components in different forms are compatible.

In an implementation, the root of trust may alternatively be deployed on the bus 130. The root of trust may have capabilities such as interface security verification, encrypted transmission, access control, identity authentication, and security measurement. Before the trusted chip 110 is powered on, the root of trust of the bus 130 may verify integrity of component firmware, to further ensure that the server 100 is not tampered with by the third party before the server 100 is powered on. Optionally, the root of trust of the bus 130 may have a running measurement capability, to ensure that the bus 130 is not tampered with by the third party in running, maintenance, and upgrade processes of the server 100, and to further improve a trust protection capability of the server 100. The root of trust of the bus 130 is deployed on the bus controller in a form of a chip. For example, it can be learned with reference to the foregoing content that the bus 130 may be the out-of-band bus or the high-speed bus, the root of trust of the out-of-band bus may be the out-of-band bus controller, and the root of trust of the high-speed bus may be the high-speed bus controller. For example, the high-speed bus may include the PCIE bus and the UB bus, so that the root of trust of the PCIE bus may be the endpoint (endpoint, EP) controller of the PCIE bus, and the root of trust of the high-speed UB bus may be the EP controller of the UB. It should be understood that the foregoing example is used for description, and this is not specifically limited in this application.

Further, the trusted chip 110 may be divided into a plurality of units or modules. For example, as shown in FIG. 3, a trusted chip 110 may include a register 1101, a one-time programmable memory 1102, an encryption module 1103, a secure boot module 1104, a secure memory 1105, a security core 1106, and an in-band/out-of-band bus controller 1107. The trusted chip 110 may establish a communication connection to the register 1101, the one-time programmable memory 1102, the encryption module 1103, the secure boot module 1104, the secure memory 1105, the security core 1106, and the in-band/out-of-band bus controller 1107 through a bus.

BSBC software may be deployed in the secure boot module 1104. Before the server 100 performs access authentication, functions such as power-on boot protection, chip unchangeability after delivery, and firmware detection are implemented by using the BSBC software. Configuration of a user-defined security policy may be further supported, and a user may set code security protection based on a service requirement. During specific implementation, the secure boot module 1104 may be implemented by using a BootROM, where the BootROM is a small ROM or a write-protect flash memory embedded in a chip.

The one-time programmable memory 1102 is configured to store a first key, and perform secure storage and integrity protection on the first key. Optionally, the one-time programmable memory 1102 may further support a dual-root signature, to further improve security of the first key. During specific implementation, the one-time programmable memory 1102 may be the efuse in the foregoing content. For details, refer to the foregoing content. Details are not described herein again.

The encryption module 1103 is configured to generate a first certificate based on the first key, and may be further used for functions such as key acceleration, side-channel attack defense, and certificate verification. This is not limited in this application.

The register 1101 may be a platform configuration register (platform configuration register, PCR), and is configured to store a measurement report of the component 120, where legality of the component 120 is verified through local attestation or remote attestation.

The secure memory 1105 is configured to store code, and the security core 1106 is configured to execute the code in the secure memory 1105, to implement various functions of the trusted chip 110 in the foregoing content, for example, performing trust authentication and trust measurement on the component 120.

The in-band/out-of-band bus controller 1107 is configured to ensure that the bus 130 is not tampered with by a third party in running, maintenance, and upgrade processes of the server 100, and to further improve a trust protection capability of the server 100. The in-band bus controller is configured to implement trust protection for a high-speed bus. An in-band bus may be a PCIE EP controller or a UB EP controller. The out-of-band bus controller is configured to implement trust protection for an out-of-band bus. An out-of-band bus controller may be an SPI bus controller or an SMBUS bus controller. This is not limited in this application.

It should be understood that FIG. 3 is used as an example for description. The trusted chip 110 may further include more components. For example, the trusted chip 110 may further include an out-of-band bus controller, a PCIE EP controller, or a UB EP controller. For descriptions of the out-of-band bus controller, the PCIE EP controller, or the UB EP controller, refer to related descriptions in the embodiment in FIG. 2. Details are not described herein again. It should be noted that the trusted chip 110 shown in FIG. 3 may be integrated inside the BMC chip, or may be externally connected to the BMC chip. For an implementation, refer to related content in the foregoing embodiment. Details are not described herein again.

It should be noted that, if the server 100 is a server in a server cluster, in an access trust authentication process, a management node in the server cluster first sends a second authentication request to an authentication node, where the second authentication request is used by the authentication node to perform trust authentication on the management node in the server cluster. After the authentication node authenticates that the management node is trusted, the management node may perform trust authentication on a trusted chip of the server. After the authentication succeeds, the trusted chip performs trust authentication on a local component. The rest may be deduced by analogy. It should be understood that a processing result of a first measurement request is similar to that of the second authentication request, and details are not described herein again.

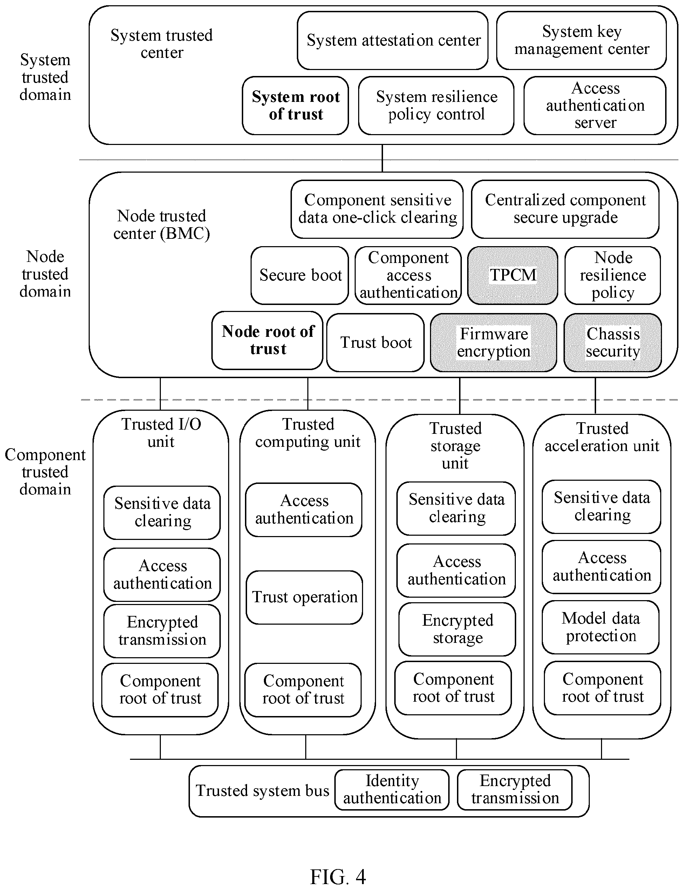

For example, FIG. 4 is a logical block diagram of a trust computing system according to this application. The trust computing system shown in FIG. 4 is a detailed explanation of the trust computing system shown in FIG. 2. As shown in FIG. 4, the trust computing system provided in this application may include a system trusted center, a node trusted center, a trusted component, and a trusted system bus. The system trusted center is deployed in the authentication node 200 in FIG. 2, the node trusted center is deployed in the server 100 in FIG. 2, the trusted component is deployed in the component 120 in FIG. 2, and the trusted system bus is the bus 130 in FIG. 2.

The system trusted center is configured to perform access trust authentication and trust measurement on nodes, and is system trusted management software. The system trusted center may include a system attestation center, a system key management center, a system root of trust, a system resilience policy control function, and an access authentication server. The system attestation center is configured to perform trust measurement on the node trusted center. The system key management center is configured to perform, based on a first preset certificate, decryption and authentication on the first certificate sent by the node trusted center. The system resilience policy control is used to implement policy distribution and control, to improve system resilience. The access authentication server is configured to perform access trust authentication on the server. The system root of trust is used to support implementation of the foregoing functions.

The node trusted center is configured to perform access trust authentication and trust measurement on components, and perform trust protection on a plurality of components. The node trusted center may be the trusted chip in the foregoing content, and is integrated inside a BMC chip or externally connected to the BMC chip. The node trusted center includes at least functions such as a node root of trust, trust boot, secure boot, component access authentication, the node root of trust, trust boot, firmware encryption, and a trusted platform control module (trusted platform control module, TPCM). Functions such as component sensitive data one-click clearing, centralized component secure upgrade, a node resilience policy, and chassis security may be further added based on an actual service requirement. This is not specifically limited in this application.

The trusted component may include a trusted I/O unit, a trusted computing unit, a trusted storage unit, and a trusted acceleration unit. The trusted computing unit is configured to perform trust protection on a computing running environment and data. The trusted I/O unit is configured to perform high-performance trusted service transmission. The trusted storage unit is configured to perform high-performance persistent trust protection. The trusted acceleration unit is configured to perform high-performance trusted service co-processing acceleration. The trusted system bus is configured to implement a trusted bus standard ecosystem.

It may be understood that, a corresponding function requirement may be designed for the foregoing component for component security and trustworthiness based on a component feature and an actual service requirement. For example, a component root of trust may be set in the trusted acceleration unit, to generate a second certificate based on a second key, and send the second certificate to the node trusted center (BMC chip) for access trust authentication. Similarly, the running trust measurement may also be implemented. A component root of trust may also be set in the trusted I/O unit, to implement access trust authentication and running trust authentication of an I/O unit. In addition, functions such as encrypted transmission and sensitive data clearing may be further set to further improve security and trust protection of the I/O unit. The foregoing example is used for description, and this is not specifically limited in this application. It should be understood that the component may combine security and trustworthiness functions as required, and reduce coupling between the functions as much as possible during design of the security and trustworthiness functions. In addition, access trust authentication and trust measurement of the component are implemented by the node trusted center, to reduce component trust complexity.

It should be noted that the root of trust in FIG. 4 is a protection mechanism for implementing integrity of a computer system, and is a basis for constructing a trust measurement environment. According to a trust measurement theory, a trusted chain is transferred level by level and cannot be broken. For construction of a secure boot chain, a hardware status during power-on is a trusted base of the trusted chain, where the trusted base of the trusted chain is also referred to as a root of trust (Root of trust). Strictly speaking, the root of trust is implemented based on a mechanism provided by hardware. Therefore, a more complete description of the root of trust is a hardware root of trust. Based on different functions, the hardware root of trust can be used for various purposes, such as reporting, startup, measurement, and storage.

During specific implementation, a component master chip (namely, a main control chip of a card, namely, a chip that is first started after the card is powered on) integrates a security subsystem or uses an external security chip (in a scenario in which the master chip does not integrate a security subsystem), and is connected to a flash of the component by using a MUX (a handover switch), to implement firmware check for secure boot of the component firmware and measurement report collection, and support sending the second certificate to the node trusted center for access authentication and sending the measurement report to the node trusted center for trust measurement.

It should be noted that, the computing unit may additionally support the node trusted center in directly accessing the flash of the component, to implement secure boot verification of a CPU BIOS and identity measurement of trust boot, and be responsible for firmware check of BIOS secure upgrade.

Optionally, the component is connected to the node trusted center through a trusted management channel, to implement measurement report collection and secure upgrade functions. The node trusted center may be a BMC chip, and the BMC chip may run node trusted management software.

In conclusion, in the trust computing system provided in this application, the trusted chip is integrated into or externally connected to the BMC chip in the new server architecture, so that trust protection on the server no longer depends on a CPU of the server, and trust protection can be performed on the server regardless of whether the CPU is powered on. This implements isolation between a service processing resource and a trust computing resource, and reduces a design threshold. In addition, after the trusted chip is authenticated by the authentication node as "trusted", the trusted chip can perform trust verification on various components of the server, to implement integrity check on the entire server to resolve a problem that security of the server is low because a vulnerability exists in the trust computing of the current server.

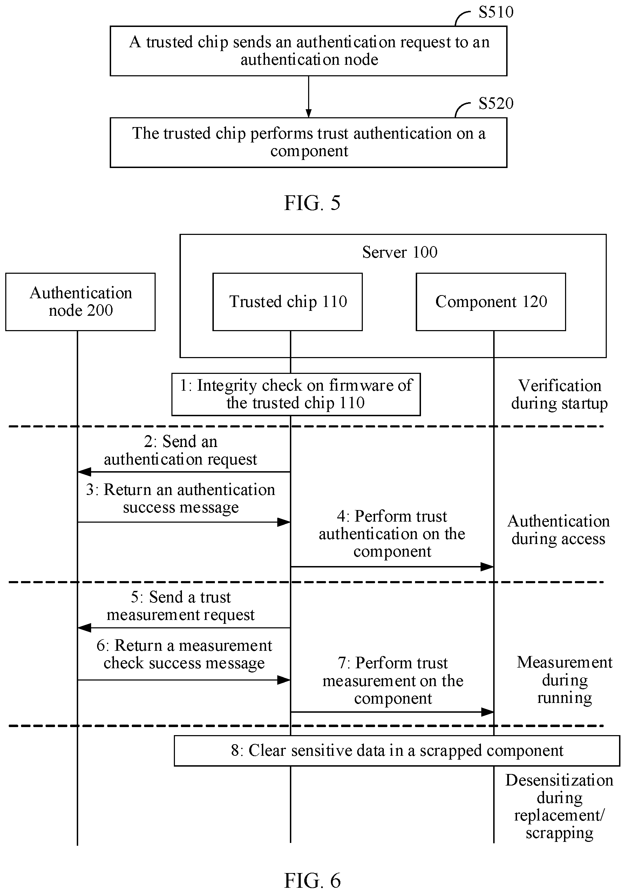

FIG. 5 shows a trust computing method according to this application. The method is applied to the new server architecture in the foregoing content, and may be specifically applied to the server 100 in embodiments in FIG. 1 to FIG. 4. The server includes a trusted chip and a component. The trusted chip and the component establish a communication connection through a bus. The method includes the following steps.

Step S510: A trusted chip 110 sends an authentication request to an authentication node 200, where the authentication request is used by the authentication node 200 to perform trust authentication on the trusted chip 110.

In an embodiment, the trusted chip 110 is integrated into a baseboard management controller BMC chip of the server, or the trusted chip is externally connected to the BMC chip. For descriptions of the trusted chip 110, the BMC chip, and the authentication node 200, refer to related descriptions in the foregoing embodiments. Details are not described herein again.

It may be understood that, the trusted chip 110 is integrated into or externally connected to the BMC chip, where the BMC chip is an embedded management system oriented to a full lifecycle of the server. In this way, the trust computing no longer depends on a service server (a CPU), and even if the CPU is not powered on, trust protection on the server can be performed by using the BMC chip. In this way, trust protection can be performed on the server when the CPU is not powered on (for example, in an installation, transportation, or scrapping phase in the full lifecycle). In addition, because the BMC chip and the CPU have an advantage of isolating a computing resource and a network resource, the trust computing does not need to consider how to isolate the computing resource, so that a design threshold is lowered and a dual-system security architecture with independent hardware protection is implemented. In addition, a network managed by the BMC chip is less exposed than a network managed by the CPU, and a third party has a lower possibility of connecting to the BMC chip than the CPU, so that an attack risk is reduced.

In an embodiment, before the trusted chip sends the authentication request to a trust authentication node, the method further includes: The trusted chip performs integrity check on firmware of the trusted chip. Specifically, the trusted chip may verify the firmware in a secure and trust boot manner, to ensure integrity of the firmware of the trusted chip, and to prevent the third party from obtaining control permission of the server by replacing the firmware in the first phase (for example, warehousing or transportation) in the lifecycle of the server. During specific implementation, power-on boot protection may be implemented by using BSBC software (a type of code that can be fixed in software). The trusted chip 110 may be set to be unchangeable after delivery, and may support a user-defined secure boot policy. Code security protection is set based on a service requirement. A specific implementation of firmware check is not limited in this application. After the firmware integrity check succeeds, the BMC chip may be started. Otherwise, processing such as warning to notify that the firmware is incomplete or powering off the server is performed.

Step S520: The trusted chip 110 performs trust authentication on a component 120, where the component 120 includes an input/output I/O unit and a storage unit. For descriptions of the component 120, refer to related descriptions in the foregoing embodiments. Details are not described herein again.

During specific implementation, after step S510, after the authentication node 200 receives the authentication request sent by the trusted chip 110 and after the authentication succeeds, the trusted chip 110 may perform step S520 to perform trust authentication on the component 120. In this way, a case in which a tampered trusted chip 110 performs trust authentication on the component 120 is avoided, and accuracy of trust authentication of the server is improved.

Optionally, after the trust authentication performed by the trusted chip 110 on the component 120 succeeds, each component, the BMC, and a processor of the server may be powered on, loaded, and run. Otherwise, a stop-loss measure may be taken, for example, performing processing such as warning to notify an authentication failure or powering off the server.

In an embodiment, in step S510, the authentication request sent by the trusted chip 110 to the authentication node 200 includes a first certificate, the first certificate is generated by the trusted chip based on a preset first key, and the first certificate is used by the authentication node to perform trust authentication on the first certificate based on a first preset certificate. If the authentication succeeds, it indicates that the trusted chip 110 is not tampered with, and is a chip having integrity and security. If the authentication fails, it indicates that the trusted chip is tampered with.

Similarly, in step S520, the component 120 may be preconfigured with a second key, and the trusted chip 110 is configured with a second preset certificate used to perform trust authentication on the component 120. After the trusted chip 110 is authenticated by the authentication node 200 as "trusted", the component 120 may generate a second certificate based on the second key. The trusted chip 110 receives the second certificate sent by the component 120, and performs trust authentication on the second certificate based on the preset second preset certificate. If the authentication succeeds, it indicates that the component 120 is not tampered with, and is a component having integrity and security. If the authentication fails, it indicates that the component is tampered with. The second preset certificate may be burnt into the chip at delivery of the trusted chip 110.

It should be noted that the first key and the second key may be private keys in an encryption algorithm, and the first preset certificate and the second preset certificate may be public key certificates in the encryption algorithm. The trusted chip 110 generates a signature and the first certificate based on the first key (private key), and sends, to the authentication node 200, the first certificate carrying the signature. The authentication node 200 may perform a signature verification operation on the received first certificate by using the first preset certificate (public key certificate), to implement trust authentication on the trusted chip 110. Similarly, the component 120 may also generate a signature and the second certificate based on the second key (private key), and sends, to the trusted chip 110 for trust authentication, the second certificate carrying the signature. Details are not described herein again. The encryption algorithm may be an asymmetric encryption algorithm (RSA), MD5, a symmetric encryption algorithm, or the like. A specific implementation of the encryption algorithm is not limited in this application.

Optionally, the first key indicates integrity of the trusted chip 110. The integrity includes integrity of physical firmware of the trusted chip 110, and further includes integrity of a software system on the trusted chip 110. The trusted chip 110 may perform integrity protection and secure storage on the first key. In this way, after the trusted chip 110 is tampered with or damaged by the third party, the first key is damaged and indicates that the integrity of the trusted chip 110 is low, and the first certificate generated by using the damaged first key cannot pass the trust authentication of the authentication node 200. If the trusted chip 110 is not tampered with or damaged by the third party, the integrity of the trusted chip 110 is high, and the first certificate generated by using the first key is to pass the trust authentication. Similarly, the second key indicates integrity of the component 120. The integrity includes integrity of physical firmware of the component 120, and further includes integrity of a software system on the component 120. The component 120 may also perform similar processing on the second key. Details are not described herein again.

During specific implementation, the first key may be stored in the trusted chip by using a one-time programmable memory (efuse), to implement integrity protection and secure storage of the key. The efuse has a one-time programmable feature. After the key is burnt into the efuse, if the third party programs the efuse by using an incorrect key in an incorrect manner, the efuse is to be fused (fused) and cannot be restored. In addition, the efuse of the chip usually stores information about the chip, for example, an available power voltage, a version number, and a production date of the chip. The chip reads data in the efuse in an initial power-on process. Therefore, storing the key in the efuse not only ensures integrity of the key, but also ensures that the trusted chip 110 is not tampered with by the third party after delivery until the trusted chip 110 is powered on. Similarly, the component 120 may also perform similar processing on the second key. Details are not described herein again. It should be understood that the foregoing method for performing integrity protection and secure storage on the first key by using the efuse technology is used as an example for description. In this application, another secure storage technology may alternatively be used to ensure integrity of the first key.

It may be understood that, in this application, performing trust authentication by the trusted chip 110 on the component 120 can resolve a disadvantage that the current server can perform trust authentication only on the CPU, and achieve an objective of performing trust authentication on the entire server. In addition, authentication on the component does not influence the authentication node 200, so that feasibility of this application is high.

In this embodiment of this application, the trusted chip 110 may perform running trust measurement on the server in a power-on running process of the server, to prevent the third party from obtaining the control permission of the server by replacing a component or upgrading to illegal image software in the third phase (for example, a server running, maintenance, or update phase) in the lifecycle of the server. The measurement refers to collecting a measurement report of the server in the running process, and analyzing and determining, according to a rule or a model, whether a system is illegally tampered with in the running process. For example, the measurement report may indicate a software and hardware status or a running feature in the running process of the server. When trust measurement is performed based on the measurement report, a software and hardware status parameter during running of the server may be compared with a preset reference value. If the parameter and the preset reference value are consistent, it indicates that the authentication succeeds, and the server is not illegally tampered with in the running process. If the parameter and the preset reference value are inconsistent, it indicates that the authentication fails, and the server may be illegally tampered with in the running process. It should be understood that the foregoing example is used for description, and the rule or the model used for trust measurement is not specifically limited in this application.

During specific implementation, the trusted chip 110 may first send a trust measurement request to the authentication node 200, where the trust measurement request is used by the authentication node 200 to perform trust measurement on the trusted chip 110. Then the trusted chip performs trust measurement on the component 120. The trust measurement request may include a measurement report of the trusted chip 110. When performing trust measurement on the component 120, the trusted chip 110 may first obtain the measurement report of the component 120, and then perform verification on the measurement report based on a measurement model. If the verification succeeds, it indicates that the component 120 is not tampered with by the third party in the running process of the server. The measurement model may be a measurement model locally downloaded by the trusted chip 110 in advance. Alternatively, the trusted chip 110 may be remotely connected to another verification node that has a measurement model to perform verification on the measurement report. This is not specifically limited in this application.

It may be understood that, in this application, performing trust measurement by the trusted chip 110 on the component 120 can resolve a disadvantage that the current server can perform trust measurement only on the CPU, implement trust measurement on all components of the server, and prevent the third party from obtaining user data or control permission of the server by tampering with a component other than the CPU in the running process of the server. In addition, the trust measurement on the component does not bring a burden to the authentication node 200, so that feasibility of this application is high.

In this embodiment of this application, when the component 120 is replaced, the trusted chip 110 may perform scrapping on the component. Specifically, the scrapping may include an operation such as locking or clearing sensitive data in the component 120, to prevent the third party from cracking the sensitive data in the component in the fourth phase (a phase such as a recycling phase or a scrapping phase) in the lifecycle of the server. In this way, trust protection of the full lifecycle of the server is implemented.

During specific implementation, a root of trust may be deployed in the component 120, and operations such as access trust authentication and running trust measurement of the component 120 may be implemented by using the root of trust. The root of trust may be a hardware chip, and may be integrated inside the component or externally connected to the component, to support the access trust authentication operation and the running trust measurement operation on the component 120.

It may be understood that, in a manner of deploying the root of trust on the component 120, a trust computing function is implemented by the root of trust, so that the trust authentication operation and the running trust measurement operation on the component do not influence service processing of the component 120. In addition, the trust authentication and the running trust measurement on the component 120 are actually performed by the trusted chip 110, so that trust complexity of the component is reduced and components in different forms are compatible.

In an implementation, the root of trust may alternatively be deployed on the bus 130. The root of trust may have capabilities such as interface security verification, encrypted transmission, access control, identity authentication, and security measurement. Before the trusted chip 110 is powered on, the root of trust of the bus 130 may perform integrity check on component firmware, to further ensure that the server 100 is not tampered with by the third party before the server 100 is powered on. Optionally, the root of trust of the bus 130 may have a running measurement capability, to ensure that the bus 130 is not tampered with by the third party in running, maintenance, and upgrade processes of the server 100, and to further improve a trust protection capability of the server 100. The root of trust of the bus 130 is deployed on the bus controller in a form of a chip. For example, it can be learned with reference to the foregoing content that the bus 130 may be the out-of-band bus or the high-speed bus, the root of trust of the out-of-band bus may be the out-of-band bus controller, and the root of trust of the high-speed bus may be the high-speed bus controller. For example, the high-speed bus may include the PCIE bus and the UB bus, so that the root of trust of the PCIE bus may be the endpoint (endpoint, EP) controller of the PCIE bus, and the root of trust of the high-speed UB bus may be the EP controller of the UB. It should be understood that the foregoing example is used for description, and this is not specifically limited in this application.

The trust computing method provided in this application may provide full-lifecycle trust protection for the server 100. FIG. 6 is a schematic flowchart of steps of a trust computing method in a full lifecycle of a server according to this application. It can be learned with reference to the embodiment in FIG. 1 that the full lifecycle of the server includes four phases. In this application, trust protection requirements of the four phases can be implemented. The trust protection requirements are as follows: verification during startup, authentication during access, measurement during running, and desensitization during replacement/scrapping. As shown in FIG. 6, the method may include the following steps.

Step 1: A trusted chip 110 of a server 100 performs integrity check on firmware of the trusted chip 110.

Optionally, after the integrity check on the firmware succeeds, the trusted chip 110 may perform step 2. Otherwise, a stop-loss measure may be taken, for example, performing processing such as warning to notify a firmware loss or powering off the server. Step 1 can prevent the server 100 from being replaced or tampered with by a third party in a transportation and warehousing process, to implement the trust protection requirement of verification during startup.

Step 2: The trusted chip 110 of the server 100 sends an authentication request to an authentication node 200, where the authentication request carries a first certificate, and the first certificate is generated by the trusted chip 110 based on a preset first key.

Specifically, the trusted chip 110 may first enable a component 120 to be powered on, receive and respond to a challenge message initiated by the authentication node 200, and initiate a trust challenge to the component 120. Further, after receiving a challenge message initiated by an access authentication center, the trusted chip 110 generates the first certificate based on the preset first key, and sends the first certificate to the authentication node 200 for trust authentication on the trusted chip 110.

Step 3: The authentication node 200 returns an authentication success message to the trusted chip 110. It should be understood that, if the authentication on the first certificate performed by the authentication node 200 fails, it indicates that the trusted chip 110 is damaged. The authentication node 200 may return an authentication failure message to the trusted chip 110, and the server 100 may take a stop-loss measure, for example, performing processing such as warning to notify the access authentication failure or powering off the server.

Step 4: The trusted chip 110 performs trust authentication on the component 120. The component 120 generates a second certificate based on a preset second key, and sends the second certificate to the trusted chip 110. The trusted chip 110 performs trust verification on the second certificate based on a preset second preset certificate. For details, refer to step S520 in the foregoing content. Details are not described herein again.

Specifically, in step 2, the trusted chip 110 initiates a trust challenge to a trusted component. After receiving the trust challenge message, the trusted component generates the second certificate based on the preset second key, and sends the second certificate to the trusted chip 110 for trust authentication. The trusted chip 110 may verify the second certificate based on the second preset certificate, and send challenge success information to the component 120 if the verification succeeds. After receiving the challenge success information, the component may continue to perform a next operation, for example, loading a basic input/output system (basic input output system, BIOS) or firmware. If the verification fails, the server 100 may take a stop-loss measure, for example, performing processing such as warning to notify the component trust authentication failure, powering off the component, or powering off the server.

It may be understood that step 2 to step 4 can prevent the third party from installing software of an untrusted version or from tampering with data in installation and startup processes of the server 100, to implement the trust protection requirement of authentication during access.

Step 5: The trusted chip 110 sends a trust measurement request to the authentication node 200. The trust measurement request includes a measurement report of the trusted chip 110. For specific descriptions of the measurement report, refer to related descriptions in embodiments in FIG. 2 to FIG. 5. Details are not described herein again.

Step 6: The authentication node 200 returns a measurement check success message to the trusted chip 110. It should be understood that, after processing the trust measurement request, if the authentication node 200 determines that a current measurement fails, it indicates that the trusted chip 110 is tampered with or damaged by the third party in a running process. The authentication node 200 may return a measurement failure message to the trusted chip 110, and the server 100 may take a stop-loss measure, for example, performing processing such as warning to notify that running measurement is untrusted or powering off the server.

Step 7: The trusted chip 110 performs trust measurement on the component.

It may be understood that step 5 to step 7 can prevent the third party from tampering with running code, stealing customer data, damaging a system, or the like in the running process of the server 100, to implement the trust protection requirement of measurement during running.

Step 8: The trusted chip 110 clears sensitive data in a scrapped component. It may be understood that step 8 can prevent the third party from reversely restoring sensitive data of a customer when the server 100 replaces or scraps a component, to implement the trust protection requirement of desensitization during replacement/scrapping. During specific implementation, the trusted chip 110 may send a notification of clearing sensitive data to the component 120. After receiving the notification, the component 120 may clear or lock local sensitive data.

In conclusion, according to the trust computing method provided in this application, the trusted chip is integrated into or externally connected to a BMC chip in a new server architecture, so that trust protection of the server no longer depends on a CPU of the server, and trust protection can be performed on the server regardless of whether the CPU is powered on. This implements isolation between a service processing resource and a trust computing resource, and reduces a design threshold. In addition, after the trusted chip is authenticated by the authentication node as "trusted", the trusted chip may perform trust verification on various components of the server, to implement integrity check on the entire server to resolve a problem that security of the server is low because a current server has a vulnerability in trust computing.

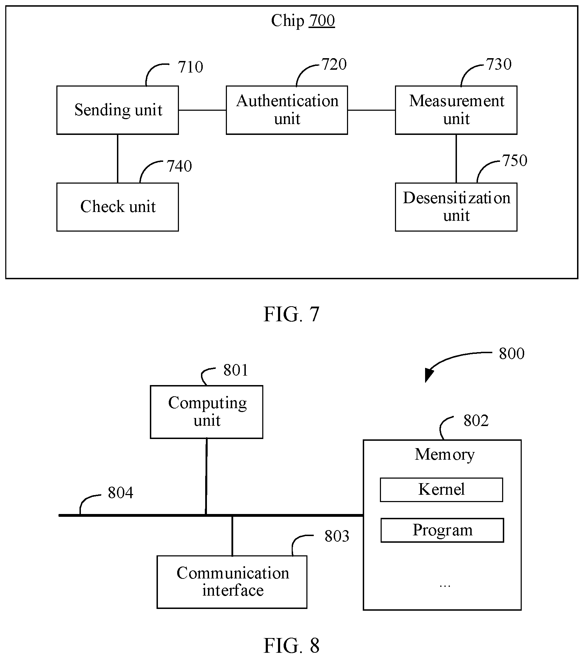

FIG. 7 shows a chip 700 according to this application. The chip may be the trusted chip 110 in the foregoing content. The chip is used in the server 100 in the foregoing content. As shown in FIG. 7, the chip 700 may include a sending unit 710, an authentication unit 720, a measurement unit 730, a check unit 740, and a desensitization unit 750.

The sending unit 710 is configured to send an authentication request to an authentication node, where the authentication request is used by the authentication node to perform trust authentication on the chip.

The authentication unit 720 is configured to perform trust authentication on the component, where the component includes an input/output I/O unit and a storage unit.

In an embodiment, the authentication request includes a first certificate, the first certificate is generated by the chip based on a preset first key, and the first certificate is used by the authentication node to perform trust authentication on the first certificate based on a first preset certificate.

In an embodiment, the authentication unit 720 is configured to receive a second certificate sent by the component, where the second certificate is generated by the component based on a preset second key. The authentication unit 720 is configured to perform trust authentication on the second certificate based on a second preset certificate.

In an embodiment, the first key indicates integrity of the chip, and the second key indicates integrity of the component.

In an embodiment, the sending unit 710 is configured to send a first measurement request to the authentication node, where the first measurement request is used by the authentication node to perform trust measurement on the chip. The measurement unit 730 is configured to perform trust measurement on the component.

In an embodiment, the check unit 740 is configured to perform integrity check on firmware of the chip before the sending unit 710 sends the authentication request to a trust authentication node.

In an embodiment, the desensitization unit 750 is configured to clear sensitive data in the component when the component is replaced.

In an embodiment, the I/O unit includes a network adapter or a riser, and the storage unit includes one or more of a hard disk backplane, an Expander, and a PCIE switch.

In a possible implementation, the component includes a computing unit, an acceleration unit, a memory expansion unit and a cooling unit. The computing unit includes a CPU, a DDR, and a power supply. The acceleration unit includes a carrier and an acceleration card interconnection switch, where an acceleration card includes one or more of a graphics processing unit GPU, a DPU, and an NPU. The memory expansion unit includes a carrier, and further includes one or more of a memory expansion chip, a DIMM, and an SCM medium. The cooling unit includes one or two of air cooling and liquid cooling.

In an embodiment, the chip is integrated into a baseboard management controller BMC chip of the server, or the chip is externally connected to the BMC chip.

In conclusion, the chip provided in this application is integrated into or externally connected to the BMC chip in the new server architecture, so that trust protection of the server no longer depends on the CPU of the server, and trust protection can be performed on the server regardless of whether the CPU is powered on. This implements isolation between a service processing resource and a trust computing resource, and reduces a design threshold. In addition, after the trust authentication is performed by the authentication node on the chip, the chip can perform trust verification on various components of the server, to implement integrity check on the entire server to resolve a problem that security of the server is low because a vulnerability exists in the trust computing of the current server.

FIG. 8 is a schematic diagram of a structure of a chip according to this application. A chip 800 is the trusted chip in embodiments in FIG. 1 to FIG. 7. Further, the chip 800 includes a computing unit 801, a memory 802, and a communication interface 803. The computing unit 801, the memory 802, and the communication interface 803 communicate with each other through a bus 804, or communicate with each other by using another means such as wireless transmission.

The computing unit 801 is a programmable logic device (Programmable Logic Device, PLD), for example, a complex programmable logic device (Complex Programmable Logic Device, CPLD), a field-programmable gate array (Field-Programmable Gate Array, FPGA), a generic array logic (Generic Array Logic, GAL), or any combination thereof. The computing unit 801 executes various types of digital storage instructions, for example, software or firmware programs stored in the memory 802, so that the chip 800 can provide a wide range of various services.

The memory 802 is configured to store program code, and the computing unit 801 controls and executes the program code, to perform the processing steps of the trusted chip 110 in any one of embodiments in FIG. 1 to FIG. 8. The program code includes one or more software units. The one or more software units are the sending unit and the authentication unit in the embodiment in FIG. 7. The sending unit is configured to send a trust authentication request to an authentication node, and the authentication unit is configured to perform trust authentication on a component. For a specific implementation, refer to descriptions of embodiments in FIG. 1 to FIG. 7. Details are not described herein again.

The memory 802 includes a read-only memory and a random access memory, and provides instructions and data for the computing unit 801. The memory 802 further includes a non-volatile random access memory. For example, the memory 802 may be configured to store a first key used to generate a first certificate, and may be further configured to store a second preset certificate used to perform trust authentication on the component.

The memory 802 is a volatile memory or a non-volatile memory, or includes a volatile memory and a non-volatile memory. The non-volatile memory is a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory is a random access memory (random access memory, RAM), and is used as an external cache. By way of example, and not limitation, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). Alternatively, the memory 802 is a hard disk (hard disk), a universal serial bus (universal serial bus, USB), a flash memory (flash), an SD card (secure digital memory card, SD card), a memory stick, or the like. The hard disk is a hard disk drive (hard disk drive, HDD), a solid-state drive (solid-state drive, SSD), a mechanical hard disk (mechanical hard disk, HDD), or the like. This is not specifically limited in this application.

The communication interface 803 is a wired interface (for example, an Ethernet interface), is an internal interface (for example, a high-speed serial computer expansion bus (Peripheral Component Interconnect express, PCIE) bus interface), a wired interface (for example, an Ethernet interface), or a wireless interface (for example, a cellular network interface or a wireless local area network interface), and is configured to communicate with another server or unit. During specific implementation, the communication interface 803 is configured to send the trust authentication request to the authentication node, and receive a second certificate sent by the component, so that the computing unit 801 performs trust authentication on the component. During specific implementation, for a specific implementation of the communication interface 803, refer to descriptions of the interface of the BMC chip in the foregoing Table 2 embodiment. Details are not described herein again.

The bus 804 is a peripheral component interconnect express (Peripheral Component Interconnect Express, PCIE) bus, an extended industry standard architecture (extended industry standard architecture, EISA) bus, a unified bus (unified bus, Ubus, or UB), a computer express link (compute express link, CXL), a cache coherent interconnect for accelerators (cache coherent interconnect for accelerators, CCIX), or the like. The bus 804 includes an out-of-band bus, a high-speed bus, and the like. For descriptions of the out-of-band bus and the high-speed bus, refer to embodiments in FIG. 1 to FIG. 7. Details are not described herein again. For clear description, various buses are all marked as the bus 804 in the figure.

It should be noted that FIG. 8 is merely a possible implementation of this embodiment of this application. In actual application, the chip 800 further includes more or fewer components. This is not limited herein. For content that is not shown or not described in embodiments of this application, refer to related descriptions in embodiments in FIG. 1 to FIG. 7. Details are not described herein again.

An embodiment of this application provides a chip, including a service core and a security core. The security core is configured to implement a management function of the BMC chip in the foregoing content, and the security core is configured to implement the trust measurement method described in the embodiments in FIG. 5 and FIG. 6.

An embodiment of this application provides a computer-readable storage medium. The computer-readable storage medium stores computer instructions. When the computer instructions are run on a computer, the computer is enabled to perform the trust computing method in the foregoing method embodiments.

An embodiment of this application provides a computer program product including instructions. The computer program product includes a computer program or the instructions. When the computer program or the instructions are run on a computer, the computer is enabled to perform the trust computing method in the foregoing method embodiments.

All or a part of the foregoing embodiments are implemented by using software, hardware, firmware, or any combination thereof. When the software is used to implement the embodiments, all or a part of the foregoing embodiments are implemented in a form of a computer program product. The computer program product includes at least one computer instruction. When the computer program instructions are loaded and executed on a computer, all or a part of the procedures or functions according to embodiments of the present invention are generated. The computer is a general-purpose computer, a dedicated computer, a computer network, or another programmable apparatus. The computer instructions are stored in a computer-readable storage medium or are transmitted from a computer-readable storage medium to another computer-readable storage medium. For example, the computer instructions are transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium is any usable medium accessible by a computer, or a data storage node, such as a server or a data center that integrates at least one usable medium. The usable medium is a magnetic medium (for example, a floppy disk, a hard disk drive, or a magnetic tape), an optical medium (for example, a high-density digital video disc (Digital Video Disc, DVD)), or a semiconductor medium. The semiconductor medium is an SSD.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A trust computing method, wherein the method is applied to a server, the server comprises a trusted chip and a component, the trusted chip and the component establish a communication connection through a bus, and the method comprises:
sending, by the trusted chip, an authentication request to an authentication node, wherein the authentication request is used by the authentication node to perform trust authentication on the trusted chip; and
performing, by the trusted chip, trust authentication on the component, wherein the component comprises an input/output I/O unit and a storage unit.

2. The method according to claim 1, wherein the authentication request comprises a first certificate, the first certificate is generated by the trusted chip based on a preset first key, and the first certificate is used by the authentication node to perform trust authentication on the first certificate based on a first preset certificate.

3. The method according to claim 2, wherein the performing, by the trusted chip, trust authentication on the component comprises:
receiving, by the trusted chip, a second certificate sent by the component, wherein the second certificate is generated by the component based on a preset second key; and
performing, by the trusted chip, trust authentication on the second certificate based on a second preset certificate.

4. The method according to claim 3, wherein the first key indicates integrity of the trusted chip, and the second key indicates integrity of the component.

5. The method according to any one of claims 1 to 4, wherein the method further comprises:
sending, by the trusted chip, a first measurement request to the authentication node, wherein the first measurement request is used by the authentication node to perform trust measurement on the trusted chip; and
performing, by the trusted chip, trust measurement on the component.

6. The method according to any one of claims 1 to 5, wherein before the sending, by the trusted chip, an authentication request to a trust authentication node, the method further comprises: performing, by the trusted chip, integrity check on firmware of the trusted chip.

7. The method according to any one of claims 1 to 6, wherein the method further comprises: clearing, by the trusted chip, sensitive data in the component when the component is replaced.

8. The method according to any one of claims 1 to 7, wherein the I/O unit comprises a network adapter or a high-speed serial computer expansion bus standard PCIE riser riser; and
the storage unit comprises one or more of a hard disk backplane, an extension unit Expander, and a PCIE switch switch.

9. The method according to any one of claims 1 to 7, wherein the component comprises a computing unit, an acceleration unit, a memory expansion unit, and a cooling unit, wherein
the computing unit comprises a central processing unit CPU, a double data rate DDR synchronous dynamic random access memory, and a power supply;
the acceleration unit comprises a carrier board and an acceleration card interconnection switch switch, wherein an acceleration card comprises one or more of a graphics processing unit GPU, a data processing unit DPU, and a neural-network processing unit NPU;
the memory expansion unit comprises a carrier board, and further comprises one or more of a memory expansion chip, a dual in-line memory module DIMM, and a storage class memory SCM medium; and
the cooling unit comprises one or two of air cooling and liquid cooling.

10. The method according to any one of claims 1 to 9, wherein the trusted chip is integrated into a baseboard management controller BMC chip of the server, or the trusted chip is externally connected to the BMC chip.

11. A chip, wherein the chip is used in a server, the server comprises the chip and a component, the chip and the component establish a communication connection through a bus, and the chip comprises:
a sending unit, configured to send an authentication request to an authentication node, wherein the authentication request is used by the authentication node to perform trust authentication on the chip; and
an authentication unit, configured to perform trust authentication on the component, wherein the component comprises an input/output I/O unit and a storage unit.

12. The chip according to claim 11, wherein the authentication request comprises a first certificate, the first certificate is generated by the chip based on a preset first key, and the first certificate is used by the authentication node to perform trust authentication on the first certificate based on a first preset certificate.

13. The chip according to claim 12, wherein the authentication unit is configured to receive a second certificate sent by the component, wherein the second certificate is generated by the component based on a preset second key; and
the authentication unit is configured to perform trust authentication on the second certificate based on a second preset certificate.

14. The chip according to claim 13, wherein the first key indicates integrity of the chip, and the second key indicates integrity of the component.

15. The chip according to any one of claims 11 to 14, wherein the chip comprises a measurement unit;
the sending unit is configured to send a first measurement request to the authentication node, wherein the first measurement request is used by the authentication node to perform trust measurement on the chip; and
the measurement unit is configured to perform trust measurement on the component.

16. The chip according to any one of claims 11 to 15, wherein the chip further comprises a check unit, and the check unit is configured to perform integrity check on firmware of the chip before the sending unit sends the authentication request to a trust authentication node.

17. The chip according to any one of claims 11 to 16, wherein the chip further comprises a desensitization unit, and the desensitization unit is configured to clear sensitive data in the component when the component is replaced.

18. The chip according to any one of claims 11 to 17, wherein the I/O unit comprises a network adapter or a high-speed serial computer expansion bus standard PCIE riser riser; and the storage unit comprises one or more of a hard disk backplane, an extension unit Expander, and a PCIE switch switch.

19. The chip according to any one of claims 11 to 17, wherein the component comprises a computing unit, an acceleration unit, a memory expansion unit, and a cooling unit, wherein
the computing unit comprises a central processing unit CPU, a double data rate DDR synchronous dynamic random access memory, and a power supply;
the acceleration unit comprises a carrier board and an acceleration card interconnection switch switch, wherein an acceleration card comprises one or more of a graphics processing unit GPU, a data processing unit DPU, and a neural-network processing unit NPU;
the memory expansion unit comprises a carrier board, and further comprises one or more of a memory expansion chip, a dual in-line memory module DIMM, and a storage class memory SCM medium; and
the cooling unit comprises one or two of air cooling and liquid cooling.

20. The chip according to any one of claims 11 to 19, wherein the chip is integrated into a baseboard management controller BMC chip of the server, or the chip is externally connected to the BMC chip.

21. A server, wherein the server comprises a trusted chip and a component;
the trusted chip is configured to send an authentication request to an authentication node, wherein the authentication request is used by the authentication node to perform trust authentication on the trusted chip; and
the trusted chip is configured to perform trust authentication on the component, wherein the component comprises an input/output I/O unit and a storage unit.

22. The server according to claim 21, wherein the I/O unit comprises a network adapter and a high-speed serial computer expansion bus standard PCIE riser riser, and the storage unit comprises a hard disk backplane, an extension unit Expander, and a PCIE switch switch.

23. The server according to claim 21 or 22, wherein the component comprises a computing unit, an acceleration unit, a memory expansion unit, and a cooling unit, wherein
the computing unit comprises a central processing unit CPU, a double data rate DDR synchronous dynamic random access memory, and a power supply;
the acceleration unit comprises a carrier board and an acceleration card interconnection switch switch, wherein an acceleration card comprises one or more of a graphics processing unit GPU, a data processing unit DPU, and a neural-network processing unit NPU;
the memory expansion unit comprises a carrier board, and further comprises one or more of a memory expansion chip, a dual in-line memory module DIMM, and a storage class memory SCM medium; and
the cooling unit comprises one or two of air cooling and liquid cooling.

24. The server according to any one of claims 21 to 23, wherein the server comprises a baseboard management controller BMC chip;
the trusted chip is integrated into the BMC chip, and the trusted chip establishes a communication connection to the BMC chip by using a high-speed bus, wherein the high-speed bus comprises one or more of a PCIE bus, a UB bus, and a CXL bus; or
the chip is externally connected to the BMC chip, and the trusted chip establishes a communication connection to the BMC chip by using an out-of-band bus, wherein the out-of-band bus comprises a serial bus and a parallel bus.

25. A chip, wherein the chip comprises a service core and a security core, the security core is configured to run instructions to implement the method according to any one of claims 1 to 10, and the management core is configured to run instructions to implement a management function.

26. A chip, wherein the chip comprises a computing unit and a memory, the memory is configured to store code, and the computing unit is configured to execute the code to implement the method according to any one of claims 1 to 10.
